# EUROPÄISCHE PATENTSCHRIFT

(11) **EP 3 393 816 B1**
(45) Veröffentlichungstag und Bekanntmachung des Hinweises auf die Patenterteilung: **28.02.2024**
(21) Anmeldenummer: 16826050.3
(22) Anmeldetag: 22.12.2016
(51) Int. Cl.: B42D 25/435, G06F 3/12, B42D 25/351, B42D 25/36, B42D 25/41, B42D 25/46, B41M 3/14, B41M 5/26

(54) **DATENTRÄGER MIT LASERINDUZIERTER AUFHELLUNGSMARKIERUNG UND VERFAHREN ZU DESSEN HERSTELLUNG**
DATA STORAGE MEDIUM HAVING A LASER-INDUCED BRIGHTENING MARK AND METHOD FOR PRODUCING SAID DATA STORAGE MEDIUM
SUPPORT DE DONNÉES AVEC MARQUAGE D'ÉCLAIRCISSAGE INDUIT PAR LASER ET PROCÉDÉ DE FABRICATION DE CELUI-CI

(30) Priorität: 22.12.2015 DE 102015226603
(43) Veröffentlichungstag der Anmeldung: 31.10.2018
(73) Patentinhaber: Bundesdruckerei GmbH, 10969 Berlin (DE)
(72) Erfinder: MUTH, Oliver, 12277 Berlin (DE); BAUDACH, Steffen, 13189 Berlin (DE); KRÜGER, Per, 14197 Berlin (DE)
(74) Vertreter: Patentanwälte Bressel und Partner mbB
(86) Internationale Anmeldenummer: PCT/EP2016/082463
(87) Internationale Veröffentlichungsnummer: WO 2017/109121

(56) Entgegenhaltungen:
- EP-A1- 2 946 938
- WO-A1-03/095226
- WO-A1-2008/138362
- DE-A1-102007 059 746
- DE-A1-102011 004 935

## Beschreibung

Die Erfindung betrifft Datenträger für Sicherheitsdokumente, die ein lasermarkiertes oder lasermarkierbares buntes Sicherheitsmerkmal umfassen, sowie ein Verfahren zur Herstellung solcher Datenträger.

Aus dem Stand der Technik ist eine Vielzahl von Datenträgern bekannt, die als Sicherheitsdokumente oder Bestandteile von Sicherheitsdokumenten genutzt werden. Als Sicherheitsdokumente werden alle Gegenstände angesehen, die mindestens ein Merkmal aufweisen, welches den Gegenstand gegen Fälschungen, Verfälschungen, unautorisierte Nachbildungen oder Nachahmungen schützt. Entitäten, die mindestens ein solches Sicherheitsmerkmal umfassen, werden auch als Sicherheitselemente bezeichnet.

Zu den Sicherheitsdokumenten zählen insbesondere Personalausweise, Reisepässe, Identitätskarten, Führerscheine als auch Gegenstände, mit denen ein Wert verknüpft ist, wie beispielsweise Banknoten, Bankkarten, Kreditkarten usw.

Eine Reihe von Sicherheitsdokumenten umfasst einen Datenträger, in dem Daten gespeichert sind. Bei einem Personalausweis sind dies u.a. Daten, die die Person charakterisieren, der das entsprechende Dokument zugeordnet ist. Darüber hinaus umfasst ein solcher Datenträger Informationen, die den Aussteller des Sicherheitsdokuments sowie weitere für eine Identifizierung einer Person notwendige Informationen angeben.

Die Erfindung betrifft solche Datenträger, die als Laminationskörper auf Basis mehrerer Substratschichten aus einem Polymermaterial gebildet sind. Zusätzlich zu Substratschichten auf Polymerbasis kann ein Datenträger auch weitere Substratschichten enthalten, die nicht auf Polymerbasis hergestellt sind. Besonders bevorzugt werden jedoch Datenträger, die ausschließlich aus Substratschichten gebildet sind, die auf Polymerbasis hergestellt sind.

Aus dem Stand der Technik ist es bekannt, zumindest einzelne Informationen in einem Datenträger für ein Sicherheitsdokument farbig oder bunt zu speichern. Als farbig wird eine Information dann angesehen, wenn sie bei einer Betrachtung oder optischen Erfassung einen farbigen Eindruck hervorrufen. Schwarz und Grautöne sowie Weiß werden in diesem Sinne nicht als farbig angesehen. Als bunt wird eine Information dann angesehen, wenn sie unterschiedliche Farbeindrücke bei einer Betrachtung oder optischen Erfassung hervorruft.

Die WO 2008/138362 lehrt die Verwendung von sphärischen Metallpartikeln, die frei von Antimon und/oder antimonhaltigen Verbindungen sind, als Lasermarkierungsmittel in einem Dichtungs- oder Verschlussmaterial, Beschichtungsmaterial oder Lack.

Die EP 2946938 A1 beschreibt ein Verfahren zur Laserbehandlung von Beschichtungen, damit hergestellte Beschichtungen, sowie deren Verwendung in Dekorations- und Sicherheitsprodukten.

Die WO 03/095226 A1 beschreibt ein Verfahren zur Herstellung eines Mehrschichtenbildes, vorzugsweise Mehrfarbenbildes. Es wird eine auf einem Papiersubstrat aufgebrachte Transferfolie eingesetzt, die mit Laserbestrahlung behandelt wird. Die Transferfolie weist eine lasersensitive Schicht und eine darunter angeordnete Hintergrundschicht auf. Die lasersensitive Schicht besteht aus lasersensitivem Material, z.B. lasersensitiven Pigmenten oder anderen lasersensitiven Farbmitteln. Durch Laserbestrahlung wird das lasersensitive Material in der Schicht bereichsweise gebleicht. Es entsteht dabei ein sogenannter laserinduzierter Bildbestandteil. Da dieser transparent oder teiltransparent ist, wird die darunter angeordnete Hintergrundschicht, welche ein Druckbild aufweisen kann, in diesem Bereich dann von oben her sichtbar. Es entsteht somit ein Mehrschichtenbild, welches durch den laserinduzierten Bildbestandteil und durch die Hintergrundschicht gemeinsam gebildet wird.

Die DE 102011004935 A1 beschriebt einen Verbundkörper und ein Verfahren zum Herstellen des Verbundkörpers mit einem innen liegenden Sicherheitsmerkmal umfassend die Schritte: Bereitstellen mindestens einer opaken Substratschicht; Einbringen von Mikroperforationen in die mindestens eine opake Substratschicht; Bereitstellen von mindestens zwei weiteren transparenten und/oder transluzenten Substratschichten; Zusammenführen der mindestens einen opaken Substratschicht mit den mindestens zwei weiteren Substratschichten, so dass die mindestens eine opake Substratschicht zwischen den mindestens zwei weiteren Substratschichten angeordnet ist, wobei die bereitgestellte mindestens eine opake Substratschicht und die bereitgestellten mindestens zwei weiteren Substratschichten so ausgewählt oder hergestellt werden, dass diese auf Basis desselben thermoplastischen Polymermaterials ausgebildet sind, und die zusammengeführten Substratschichten in einem Hochtemperatur-Hochdruck-Laminationsverfahren zu dem Verbundkörper zusammengefügt werden, so dass dieser monolithisch ausgebildet wird und wobei eine Oberseite und eine ebene Unterseite des Verbundkörpers zumindest im Bereich der innen liegenden Mikroperforationen eben ausgebildet werden.

Ferner ist aus dem Stand der Technik bekannt, Informationen beispielsweise farbig oder bunt in ein Sicherheitsdokument zu integrieren, indem eine der Substratschichten, aus denen anschließend der Datenträger als Laminationskörper hergestellt wird, vor dem Laminieren farbig bzw. bunt bedruckt wird. Ein Vorteil des Bedruckens vor dem Laminieren liegt darin, dass die bedruckte Oberfläche im Innern des Laminationskörpers angeordnet werden kann, sodass eine nachträgliche Verfälschung und/oder Manipulation deutlich erschwert ist oder unmöglich ist. Ein Nachteil an einem solchen Herstellungsverfahren bzw. einem so erzeugten Datenträger ist es, dass dieser bereits bei der Herstellung mit sämtlichen bunt oder farbig zu speichernden Informationen versehen werden muss. Eine nachträgliche Kodierung der Information ist nicht möglich.

Um nachträglich Informationen in einen Datenträger oder Datenträgerrohling einzubringen, ist es im Stand der Technik bekannt, Lasermarkierungsverfahren zu verwenden, die Markierung von Sicherheitsdokumenten oder Datenträgern beschreiben, wobei über eine Wechselwirkung mit Laserlicht im Innern des Datenträgers eine Schwarz- oder Graufärbung des Kunststoffmaterials bewirkt wird.

Aus der DE 10 2012 211 767 A1 ist ein Verfahren zur Herstellung eines Dokumentenrohlings oder eines Sicherheitsdokuments bekannt, umfassend die Schritte: Bereitstellen einer Substratschicht mit einer Metallschicht oder Aufbringen einer Metallschicht auf eine Substratschicht, Ausbilden eines farbwirksamen Musters in oder auf der Metallschicht, wobei das Muster eine Bildpunktstruktur aufweist und jeder Bildpunkt mindestens zwei Unterbildpunkte umfasst, welche eine monochromatische Farbwirkung hervorrufen, Zusammenfügen der Substratschicht mit mindestens einer weiteren transparenten Substratschicht zu einem Dokumentenkörper. Ferner sind ein entsprechend hergestellter Sicherheitsdokumentenrohling, ein entsprechend personalisiertes Sicherheitsdokument sowie ein Verfahren zur farbigen Laserpersonalisierung von Sicherheitsdokumentenrohlingen beschrieben. Bei der Laserpersonalisierung wird ein fokussierter Laserstrahl auf die Metallschicht gelenkt, so dass gezielt Bereiche der Metallschicht lokal entmetallisiert werden, so dass die Farbwirkung der den entmetallisierten Bereichen zugeordneten Unterbildpunkte beseitigt wird.

Die DE 10 2007 059 746 A1 beschreibt ein Verfahren zur Herstellung eines Sicherheits- und/oder Wertdokuments, enthaltend einen Polymerschichtverbund oder bestehend hieraus, wobei der Polymerschichtverbund aus einem Polymerschichtteilverbund und einer Polymerdeckschicht gebildet ist und wobei der Polymerschichtteilverbund und/oder die Polymerdeckschicht eine lasersensitive Komponente enthält, mit den folgenden Verfahrensschritten: A) auf den Polymerschichtteilverbund wird eine erste personalisierte Information mittels eines Tintenstrahldruckverfahrens als farbige Tintenstrahldruckschicht aufgebracht, B) auf die Tintenstrahldruckschicht wird die Polymerdeckschicht aufgebracht und mit dem Polymerschichtteilverbund durch thermische Lamination zusammengefügt, und C) mittels Lasergravur wird eine zweite personalisierte Information in den in Stufe B) erhalten Polymerschichtverbund des Sicherheits- und/oder Wertdokuments eingebracht.

Die DE 10 2011 004 935 A1 beschreibt einen Verbundkörper und ein Verfahren zum Herstellen eines solchen Verbundkörpers mit einem innen liegenden Sicherheitsmerkmal. Das Verfahren umfasst die Schritte: Bereitstellen mindestens einer opaken Substratschicht; Einbringen von Mikroperforationen in die mindestens eine opake Substratschicht; Bereitstellen von mindestens zwei weiteren transparenten und/oder transluzenten Substratschichten; Zusammenführen der mindestens einen opaken Substratschicht mit den mindestens zwei weiteren Substratschichten, so dass die mindestens eine opake Substratschicht zwischen den mindestens zwei weiteren Substratschichten angeordnet ist, wobei die bereitgestellte mindestens eine opake Substratschicht und die bereitgestellten mindestens zwei weiteren Substratschichten so ausgewählt oder hergestellt werden, dass diese auf Basis desselben thermoplastischen Polymermaterials ausgebildet sind, und die zusammengeführten Substratschichten in einem Hochtemperatur-Hochdruck-Laminationsverfahren zu dem Verbundkörper zusammengefügt werden, so dass dieser monolithisch ausgebildet wird und wobei eine Oberseite und eine Unterseite des Verbundkörpers zumindest im Bereich der innen liegenden Mikroperforationen eben ausgebildet werden.

In der DE 10 2010 062 032 A1 wird ein Sicherheitsmerkmal für Wert- und/oder Sicherheitsdokumente beschrieben, das vorzugsweise mindestens eine Dokumentenlage aufweist, In einer oder mehreren ersten Ebenen befindet sich ein aus ersten Bildelementen gebildetes erstes Muster. Ferner befindet sich in einer oder mehreren zweiten Ebenen ein aus zweiten Bildelementen gebildetes und zu den ersten Bildelementen des ersten Musters passgenau angeordnetes zweites Muster. Die zweiten Bildelemente befinden sich zwischen den ersten Bildelementen und Außenseiten des Wert- und/oder Sicherheitsdokuments. Nur über einem Teil der ersten Bildelemente ist jeweils ein zweites Bildelement angeordnet. Die zweiten Musterelemente können mittels Laserstrahlung nach einem Laminationsprozess im Innern des Wert- und/oder Sicherheitsdokuments erzeugt werden.

Ein ähnliches Sicherheitsmerkmal ist in der DE 10 2010 062 046 A1 beschreiben. Dort sind die ersten Musterelemente transparent und oder transluzent ausgebildet. Auch das übrige Wert- und/oder Sicherheitsdokument wird bezogen auf eine Sichtachse im Bereich der ersten Musterelemente bis auf die zweiten Musterelemente transparent und/oder transluzent ausgebildet, so dass im Durchlicht eine durch die Muster festgelegte Information wahrnehmbar ist. Das erste Muster kann in beiden Fällen farbig oder bunt ausgebildet sein.

Aus der EP 2 567 825 ist ein Verfahren zur Farblasermarkierung einer Sicherheitsdokumentvorstufe bekannt, die mindestens folgendes umfasst:- eine polymere Folie, und - mindestens eine farblose, farbbildende, zur Herstellung einer von Schwarz verschiedenen Farbe dienende Schicht, die mindestens einen Infrarotstrahlung absorbierenden Stoff, eine farbbildende Verbindung und ein polymeres Bindemittel enthält, und - zur Herstellung einer schwarzen Farbe entweder einen lasermarkierbaren polymeren Träger aus der Gruppe bestehend aus Polycarbonat, Polyvinylchlorid, Polystyrol-Acrylnitril-Butadien und Copolymeren derselben oder eine lasermarkierbare Schicht, die ein Laseradditiv und ein Polymer aus der Gruppe bestehend aus Polystyrol, Polycarbonat und Polystyrolacrylnitril enthält, wobei das Verfahren folgende Schritte umfasst: - die Lasermarkierung der farblosen farbbildenden Schicht mittels eines Infrarotlasers, der in Impulsmodus bei einer Impulsfolgefrequenz von mindestens 15 kHz betrieben wird, um eine zu Schwarz verschiedene Farbe herzustellen, und - die Lasermarkierung des lasermarkierbaren polymeren Trägers oder der lasermarkierbaren Schicht mittels desselben Infrarotlasers, der in Impulsmodus bei einer Impulsfolgefrequenz von höchstens 5 kHz betrieben wird, um eine schwarze Farbe herzustellen.

In allen bekannten Fällen ist das erreichbare optische Erscheinungsbild einer bunten kodierten Information eher dunkel und wird als nicht besonders ansprechend wahrgenommen.

Der Erfindung liegt somit die technische Aufgabe zugrunde, einen Datenträger für ein Sicherheitsdokument sowie ein Verfahren zu dessen Herstellung sowie ein Kodierverfahren für eine farbige Kodierung eines Datenträgers anzugeben, mit denen eine nachträgliche individuelle bunte Kodierung einer Information möglich ist bzw. in denen eine individuelle Kodierung enthalten ist.

Die Erfindung wird durch einen Datenträger mit den Merkmalen des Patentanspruchs 1 sowie ein Verfahren zum Herstellen eines Datenträgers mit den Merkmalen des Patentanspruchs 8 erfindungsgemäß gelöst. Vorteilhafte Ausführungsformen ergeben sich aus den Unteransprüchen.

Der Erfindung liegt die Idee zugrunde, zum einen im Innern des Datenträgers, der als Laminat ausgebildet ist, ein Farbmuster zu integrieren, welches in Basisfarben eines Farbsystems unterschiedlich eingefärbte, nebeneinander ausgebildete Musterelemente enthält. Zusätzlich werden Aufhellungsadditive in den Datenträger integriert. Diese sind so ausgebildet, dass diese bei lokaler Wechselwirkung mit Laserstrahlung geeigneter Wellenlänge und Intensität lokal eine Aufhellung oder Weißfärbung des Datenträgers im Innern bewirken. Hierdurch wird es möglich, durch eine lokal gezielte Aufhellung über einzelnen oder mehreren Musterelementen einen Gesamteindruck des darunter befindlichen oder in derselben Ebene ausgebildeten Farbmusters zu verändern, um hierüber eine optisch erfassbare bunte Information zu kodieren.

### Definitionen

Als Metallschicht wird jede Schicht aufgefasst, welche metallische Elemente, Legierungen von Metallen und/oder Metalloxid oder andere Metallverbindungen umfasst, welche reflektierend sind. Insbesondere können diese Schichten aus Silber, Gold, Kupfer, Aluminium, Platin, Eisen oder auch Legierungen aus diesen Metallen gebildet sein.

Als sichtbares Licht wird Licht bezeichnet, welches in jenem Wellenlängenbereich liegt, welcher durch ein menschliches Auge erfassbar ist. Als infraroter Wellenlängenbereich wird der Wellenlängenbereich betrachtet, der sich dem sichtbaren Spektrum im langwelligen Bereich anschließt. Als UV-Strahlung wird der Teil des elektromagnetischen Spektrums aufgefasst, der sich an den kurzwelligen Wellenlängenbereich des sichtbaren Spektrums anschließt.

Eine Substratschicht ist jeweils eine selbsttragende Schicht. Nichtselbsttragende Schichten, beispielsweise aufgedruckte Schichten, stellen keine eigenständigen Substratschichten dar. Substratschichten können insbesondere als Folien ausgebildet sein. Teilweise wird der Begriff Folie als Synonym für eine Substratschicht verwendet.

Ein Farbmuster ist eine Gesamtheit aus farbigen Musterelementen. Ein Farbmuster aus unterschiedlich farbigen Musterelementen ist eine Gesamtanordnung aus Musterelementen, die jeweils monochromatisch sind. Der Ausdruck unterschiedlich farbige Musterelemente bedeutet hierbei, dass mindestens zwei unterschiedlich farbige monochromatische Musterelemente existieren. Das Farbmuster selbst kann jeweils mehrere Musterelemente umfassen, die denselben monochromatischen Farbeindruck hervorrufen. Die einzelnen unterschiedlichen Musterelemente sind somit jeweils Klassen von Musterelementen zuordenbar, wobei die Musterelemente einer Klasse jeweils denselben monochromatischen Farbeindruck hervorrufen. Musterelemente verschiedener Klassen rufen verschiedene Farbeindrücke hervor. Vorzugsweise ist ein Farbmuster aus verschiedenfarbigen Musterelementen aus Musterelementen dreier Klassen aufgebaut, die Grundfarben eines aufgespannten Gamuts zugeordnet sind. Beispielsweise können die drei Klassen den Farben Cyan, Magenta und Gelb zugeordnet sein, so dass die entsprechenden Musterelemente cyanfarben, magentafarben und gelb sind. Die Ausdrücke unterschiedlich farbig und verschiedenfarbig werden hier als Synonyme verwendet.

Als farbig wird ein Gegenstand aufgefasst, der einen Farbeindruck bei einem Menschen bei einer Betrachtung hervorruft. Grautöne sowie Weiß und Schwarz werden nicht als farbig aufgefasst.

Bunt ist eine Information oder eine grafische Darstellung, wenn sie mehrere verschiedenfarbige Bereiche, Gebiete oder Ähnliches umfasst.

Eine bunte Information ist somit eine Information, die Bildbestandteile umfasst, die verschiedene Farbeindrücke hervorrufen. Als vollfarbig wird eine Information angesehen, wenn diese eine Vielzahl von unterschiedlichen Farbeindrücken für Bildpunkte hervorrufen kann, die in einem Farbraum (Gamut) liegen. Diese Farbeindrücke können über eine Farbmischung aus monochromatischen farbigen Unterbereichen zusammengesetzt sein, die bei der optischen Erfassung nicht als getrennte Bereiche erfasst werden. Die einzelnen Musterelemente des Farbmusters sind so ausgebildet, dass diese mit monochromatischen Bereichen assoziiert werden können, die bei einer Zusammenfassung mit benachbarten, aber verschiedenfarbigen Musterelementen jeweils einen Bildbereich oder Bildpunkt bilden, der eine Farbe des Farbraums annehmen kann. Über eine Variation der Farbeindrücke der einem Bildpunkt zugeordneten Musterelemente bzw. über eine Modifikation der einem Bildpunkt zugeordneten Unterbildpunkte bzw. Musterelemente kann ein Farbeindruck des Bildpunktes variiert werden. Dieses kann durch ein Entfärben einzelner Musterelemente ein Verdecken durch eine opake Markierung und/oder durch eine Aufhellung vor oder im Bereich des Unterbildpunktes oder Musterelements erfolgen. Auch eine Veränderung der Musterelementflächen kann eine solche Beeinflussung des Farbeidrucks des Bildpunktes bewirken.

Als eine Aufhellung im Innern eines Laminationskörpers wird ein Bereich oder Gebiet bezeichnet, der oder das eine erhöhte Reflexion von Licht über einen breiten Wellenlängenbereich bewirkt. Eine Aufhellung kann beispielsweise durch eine Aufschäumung von transparentem Polymermaterial herbeigeführt sein. Alternativ oder zusätzlich kann eine Aufhellung durch eine Änderung eines Brechungsindexes bewirkt werden, die ebenfalls im Verhältnis zum Brechungsindex der Umgebung für eine erhöhte Reflexion und/oder Brechung von Licht verantwortlich sein kann. Auch andere physikalische Effekte, welche eine erhöhte Lichtemission bewirken, werden als Aufhellung betrachtet. Beispielsweise können Mikrokavitäten Aufhellungen bilden.

Ein Bildpunkt ist eine Informationseinheit, der ein bestimmter Farbton zugeordnet ist. Ein Unterbildpunkt ist ein monochrom ausgebildeter Bestandteil eines Bildpunkts, der gemeinsam mit anderen Unterbildpunkten zum Herbeiführen einer Farbwirkung des Bildpunktes bzw. dessen Farbton beiträgt. Als monochromatisch wird eine Farbwirkung bezeichnet, wenn ein hervorgerufener Farbeindruck über eine gesamte Fläche des Unterbildpunktes dem entspricht, den Licht mit einem eingegrenzten spektralen Wellenlängenbereich hervorruft. Farbeindrücke müssen jedoch nicht Spektralfarben entsprechen. Sie müssen lediglich einem Farbort in einem Farbraum zuordenbar sein.

Als Farbmischung wird das Hervorrufen eines Farbeindrucks bei einem menschlichen Betrachter verstanden, welches dadurch hervorgerufen wird, dass Licht unterschiedlicher Wellenlängen, welches unterschiedlichen Spektralfarben zugeordnet ist, bei dem menschlichen Betrachter gemeinsam einen Farbeindruck hervorrufen, der von den Farbeindrücken verschieden ist, die den entsprechenden Spektralfarben des bei der Farbmischung verwendeten Lichts entsprechen. Wird rotes, blaues und grünes Licht überlagert, so nimmt ein menschlicher Betrachter das Licht als weiß wahr. Werden spektral grünes und spektral rotes Licht überlagert, so wird die Überlagerung als gelbes Licht wahrgenommen. Eine Überlagerung von rotem und blauem Licht wird als magentafarbenes Licht wahrgenommen. Auf diese Weise lassen sich nahezu unendlich viele Farbeindrücke hervorrufen, sofern nicht nur die verwendeten Wellenlängen, sondern auch die Intensitätsanteile des Lichts unterschiedlicher Wellenlänge individuell angepasst werden können. Eine solche Anpassung kann beispielsweise über eine Anzahl der den einzelnen Spektralfarben oder Basisfarben eines Farbsystems zugeordneten Unterbildpunkte festgelegt werden, sofern jedem Bildpixel oder jedem Bildinformationsbestandteil, welche einen unterschiedlichen Farbton annehmen können, mehrere Unterbildpunkte ein und derselben monochromatischen Basisfarbe zugeordnet sind. Doch selbst wenn jedem Bildpunkt nur beispielsweise drei einen unterschiedlichen monochromatischen Farbeindruck hervorrufende Unterbildbereiche oder Unterbildpunkte zugeordnet sind, können mindestens sieben unterschiedliche Farbeindrücke hervorgerufen werden, beispielsweise bei einem Rot-Grün-Blau-Farbsystem die Farben Rot, Gelb, Grün, Zyan, Blau, Magenta und Weiß. Die Begriffe Farbwirkung und Farbeindruck werden hier als Synonyme angesehen.

Es können bei einer Ausführungsform auch Farbmittel eingesetzt werden, die Licht bestimmter Wellenlängen absorbieren und hierüber einen Farbeffekt hervorrufen. Auch bei unterschiedlichen Farbmitteln dieser Art gibt es eine Farbmischung zur Erzielung eines Gesamtfarbeindrucks.

Im Sinne des hier beschriebenen sind Musterelemente mit Unterbildpunkten zu assoziieren.

Ein Aufhellungsadditiv ist ein Additiv, insbesondere für ein Polymermaterial oder eine Zubereitung zum Herstellen eines Polymermaterials, welches lasersensitiv ist und welches bei Wechselwirkung mit Laserlicht geeigneter Wellenlänge, geeigneter Laserenergie oder -intensität, gegebenenfalls geeigneter Pulslänge und/oder geeigneter Einwirkungszeit etc., eine Aufhellung in dem Material, insbesondere dem Polymermaterial, beispielsweise Polycarbonat, in das dieses Additiv zugefügt ist, verursacht. Ein Aufhellungsadditiv kann somit eine Aufhellung bei Wechselwirkung mit geeignetem Laserlicht bewirken.

Die geeigneten Bedingungen für das Laserlicht hängen in der Regel vom Aufhellungsadditiv oder den Aufhellungsadditiven, dessen oder deren Konzentration in dem umgebenden Material sowie der Beschaffenheit und Zusammensetzung des umgebenden Materials ab.

### Bevorzugte Ausführungsformen

Geschaffen wird ein Datenträger mit einem lasermarkierten oder lasermarkierbaren bunten Sicherheitsmerkmal, umfassend einen aus mehreren Substratschichten, von denen eine ein aus in Basisfarben eines Farbsystems unterschiedlich eingefärbten, nebeneinander ausgebildeten Musterelementen aufgebautes Farbmuster umfasst, gebildeten Laminationskörper, bei dem das Farbmuster im Innern des Laminationskörpers ausgebildet ist, wobei in dem Laminationskörper zusätzlich Aufhellungsadditive integriert sind, welche bei einer lokalen Wechselwirkung mit Laserlicht eine lokale Aufhellung und/oder Weißfärbung im Innern des Laminationskörpers bewirken können.

Ferner wird ein Verfahren zum Herstellen eines Datenträges für ein Sicherheitsdokument geschaffen, welches die Schritte umfasst:
Bereitstellen von mehreren Substratschichten,
Zusammentragen der mehreren Substratschichten zu einem Substratschichtenstapel, in dem die mehreren Substratschichten flächig übereinander gestapelt sind,
Ausführen eines Laminationsschritts, indem dem Substratschichtenstapel Energie zugeführt wird, während diese aufeinander gepresst werden, so dass sich diese flächig miteinander zu einem den Datenträger ausbildenden Laminationskörper verbinden, wobei eine der mehreren Substratschichten vor dem Laminieren mit einem aus in Basisfarben eines Farbsystems unterschiedlich eingefärbten, nebeneinander ausgebildeten Musterelementen aufgebauten Farbmuster versehen ist oder wird und ins Innere des gebildeten Laminationskörpers zusätzlich Aufhellungsadditive integriert welche bei einer lokalen Wechselwirkung mit Laserlicht eine lokale Aufhellung und/oder Weißfärbung im Innern des Laminationskörpers bewirken können.

Eine Aufhellung respektive Weißfärbung im Innern eines Laminationskörpers bezeichnet ein Gebiet, das eine erhöhte Reflexion von Licht über einen breiten Wellenlängenbereich bewirkt.

Der Vorteil besteht darin, dass Datenträger, welche als Sicherheits- oder Wertdokument dienen können oder ein Vorprodukt oder Halbzeug für ein Sicherheits- oder Wertdokument sein können, geschaffen werden, welche nach der Herstellung des Laminationskörpers bunt individuell markiert werden können oder markiert sein können. Die hierbei erzielten Farbeindrücke sind hell.

Bei einer bevorzugten Ausbildung des Datenträgers ist mittels lokal ausgebildeter Aufhellungen und/oder Weißfärbungen, die über eine Laserwechselwirkung in Bereichen mit den Aufhellungsadditiven ausgebildet sind, im Zusammenwirken mit dem Farbmuster eine bunte Information kodiert.

Im Zusammenwirken mit laserinduzierten lokal ausgebildeten Aufhellungen, die bezogen auf eine optische Erfassungseinrichtung oder einen Betrachter vor oder im Bereich des Farbmusters im Innern des Laminationskörpers ausgebildet sind, wird der Gesamteindruck des Farbmusters verändert. Hierüber wird oder kann eine Information kodiert werden.

Die unterschiedlich farbigen monochromatischen Musterelemente umfassen mindestens zwei Klassen von Musterelementen, wobei die Musterelemente einer Klasse denselben monochromatischen Farbeindruck hervorrufen und die Musterelemente verschiedener der mindestens zwei Klassen einen unterschiedlichen Farbeidruck hervorrufen. Bei geeigneter Anordnung der Musterelemente in dem Farbmuster wird es somit möglich, die Wahrnehmung oder Wahrnehmbarkeit einzelner Musterelemente mittels lokaler Modifikationen im Innern des Laminationskörpers zu beeinflussen, so dass sich aufgrund der Farbmischung Farbeindrücke ergeben, die von den durch die einzelnen Musterelemente hervorgerufenen monochromatischen Farbeidrücken abweichen.

Der Laminationskörper ist zwischen einer Oberseite, welche eine Betrachtungsseite ist, und dem Farbmuster insoweit transparent ausgebildet, dass das Farbmuster durch die Betrachtungsseite erfassbar ist. Die Substratschichten, die zwischen der Substratschicht mit dem Farbmuster und der Oberseite angeordnet sind, müssen nicht über ihre gesamte Fläche transparent ausgebildet sein. Es reicht aus, wenn diese zumindest teilweise im Bereich des Farbmusters transparent sind, hierbei kann die Transparenz auch durch Aussparungen oder Mikroperforationen oder Ähnliches ausgestaltet sein. Bevorzugt wird es jedoch, dass die Substratschichten zwischen dem Farbmuster und der Oberseite im Volumen transparent und nicht opak bedruckt sind.

Die laserinduzierten oder induzierbaren Aufhellungen beeinflussen bei einer optischen Erfassung des Farbmusters durch die Oberseite den Farbeindruck des Farbmusters bei einer Ausführungsform lokal, insbesondere jeweils einen Farbeindruck eines oder mehrerer Musterelemente, besonders bevorzugt jeweils eines Musterelements. Bei der letztgenannten Variante kann musterelementgenau eine Aufhellung und Beeinflussung der Farbmischung im Zusammenwirken mit umgebenden Musterelementen erreicht werden.

Bei einer Ausführungsform ist daher vorgesehen, dass mittels lokal ausgebildeten Aufhellungen und/oder Weißfärbungen, die über eine Laserwechselwirkung in Bereichen mit den Aufhellungsadditiven ausgebildet sind, im Zusammenwirken mit dem Farbmuster eine bunte Information kodiert ist, kodierbar ist oder wird.

Besonders bevorzugt ist die bunte Information ohne eine sonstige Modifikation der Musterelemente des Farbmusters hinsichtlich ihres Farbeindrucks kodiert.

Eine Aufhellung im Bereich der Aufhellungsadditive kann über eine fokussierte Einstrahlung von Laserlicht geeigneter Wellenlänge und Energie herbeigeführt werden. Vorzugsweise wird Laserlicht in Form von Lichtpulsen genutzt, welches gepulste Laser bereitstellen. Mittels gepulsten Laserlichts kann die zugeführte Energiemenge gut kontrolliert werden, da die Energiemenge eines einzelnen Laserpulses in einem Zug von Laserpulsen in der Regel konstant ist.

Um den Kontrast der gespeicherten Information zu steigern oder eine weitere Information in dem Datenträger zu speichern, ist es bei einigen Ausführungsformen vorgesehen, dass die bunte Information zusätzlich zu den Aufhellungen oder Weißfärbungen laserinduzierte Dunkel- oder Schwarzfärbungen umfasst. Um solche ebenfalls im Bereich der Aufhellungsadditive herbeizuführen, ist eine Zufuhr einer höheren Energie notwendig. Wird eine ausreichend hohe Laserintensität genutzt, so kann eine Dunkel- oder Schwarzfärbung erreicht werden, ohne dass zuvor eine Aufhellung oder Weißfärbung entsteht.

Besonders bevorzugt werden in einem ersten Bearbeitungsschritt Aufhellungen mittels des Einstrahlens von Laserlicht, welches erste Parameter hinsichtlich Wellenlänge, Pulsdauer, Pulsenergie, Fokusgröße, Stahldivergenz etc. aufweist, bewirkt. In einem zweiten Schritt wird Laserlicht, welches zweite Parameter hinsichtlich Wellenlänge, Pulsdauer, Pulsenergie, Fokusgröße, Stahldivergenz etc. aufweist, gezielt gesteuert lokal eingestrahlt, um lokale Dunkel oder Schwarzfärbungen zu erreichen. Um unterschiedliche Graustufen oder unterschiedliche Aufhellungen ausführen zu können, können jeweils die zweiten bzw. ersten Parameter leicht modifiziert werden. Insbesondere die Pulsenergie oder die Anzahl von Laserpulsen, die zum Ausbilden einer lokalen Modifikation eingesetzt werden, können hierzu variiert werden.

Bevorzugt werden Nd:YAG-Laser mit einer Wellenlänge von 1064 nm oder deren frequenzverdoppeltes Licht bei 532 nm eingesetzt. Es sind auch CO₂-Laser einsetzbar, welche eine Wellenlänge von etwa 10,6 µm aufweisen. Auch andere Laser sind nutzbar.

Bei einer Ausführungsform ist vorgesehen, dass die Aufhellungsadditive in einer ohne vorherige Wechselwirkung mit Laserlicht transparenten Schicht in den Laminationskörper integriert werden. Dieses ermöglicht es die Laseradditive quasi an beliebigen Stellen in einem Laminationskörper eines Datenträgers zu positionieren und zu integrieren.

Bei einer Ausführungsform ist vorgesehen, dass die Aufhellungsadditive mittels einer der mehreren selbsttragenden Substratschichten in den Laminationskörper integriert sind, wobei die Aufhellungsadditive dem Polymermaterial der Substratschicht beigefügt und im Volumen der Substratschicht, vorzugsweise im gesamten Volumen der Substratschicht verteilt sind.

Eine präzisere Platzierung der Aufhellungsadditive ist möglich, wenn die Aufhellungsadditive als Bestandteil einer Zubereitung in den Datenträger integriert werden. Diese Zubereitung kann auf unterschiedliche Weise auf oder in eine oder mehrere der Substratschichten auf oder eingebracht werden. Beispielsweise können die Aufhellungsadditive so in Form einer oder mehrerer nicht selbsttragender Schichten auf eine oder mehrere Oberflächen einer der mehreren Substratschichten aufgebracht sein oder werden. Diese nicht selbsttragende Schicht kann durchgehend oder lateral strukturiert ausgebildet sein. Ebenso ist es möglich die Aufhellungsadditive mittels mehrerer nicht selbsttragender Schichten, die übereinander angeordnet sind oder werden, in den Laminationskörper zu integrieren. Auch diese können lateral strukturiert oder durchgehend ausgebildet sein.

Gemäß einem Aspekt der Erfindung wird die Verwendung einer Zubereitung enthaltend: A) 0,1 bis 20 Gew.-% eines Bindemittels mit einem Polycarbonatderivat, vorzugsweise auf Basis eines geminal disubstituierten Dihydroxydiphenylcycloalkans, B) 30 bis 99,9 Gew.-% eines vorzugsweise organischen Lösungsmittels oder Lösungsmittelgemischs, C) 0 bis 10 Gew.-%, bezogen auf Trockenmasse, eines Farbmittels oder Farbmittelgemischs, D) 0,1 bis 10 Gew.-% eines Aufhellungsadditives oder eines Gemisches von Aufhellungsadditiven, d.h. eines funktionales Materials oder einer Mischung funktionaler Materialien, die bei einer Wechselwirkung mit Laserlicht eine Aufhellung eines transparenten Polymermaterials bewirken können, E) 0 bis 30 Gew.-% Additive und/oder Hilfsstoffe, oder einer Mischung solcher Stoffe, wobei die Summe der Komponenten A) bis E) stets 100 Gew.-% ergibt, zum Integrieren von Aufhellungsadditiven in einen Laminationskörper gelehrt.

Diese Lehre beruht zunächst auf der Erkenntnis, dass die beschriebenen Polycarbonatderivate hochkompatibel mit Polycarbonatwerkstoffen für Folien, insbesondere mit Polycarbonaten auf Basis Bisphenol A, wie beispielsweise Makrofol^{®} Folien, sind. Die hohe Kompatibilität zeigt sich darin, dass sich das Polycarbonatderivat der eingebrachten Schicht mit den Aufhellungsadditiven mit den Polycarbonatwerkstoffen der Folien zu einem monolithischen Verbund fügt. Eine Schichtgrenze zwischen den Materialien ist nach dem Laminieren optisch nicht mehr zu detektieren. Hinzu kommt, dass das eingesetzte Polycarbonatderivat hochtemperaturstabil ist und keinerlei Verfärbungen bei laminationstypischen Temperaturen bis zu 200 °C und mehr zeigt. Des Weiteren ist es überraschend, dass eine für den Siebdruck bekannte Farbzusammensetzung (unter Anpassung der Viskosität) hinsichtlich des verwendeten Binders auch für den Tintenstrahldruck geeignet ist. Schließlich wurde als vorteilhafte Eigenschaft festgestellt, dass die gegebenenfalls enthaltenen Farbmittel der Zusammensetzung in die bedruckte Polymerschicht penetrieren, so dass eine auf der Oberfläche der Polymerschicht aufgebrachte Druckschicht nicht zerstörungsfrei entfernt werden kann. Somit eignen sich die beschriebenen Zusammensetzungen z.B. auch für die Individualisierung oder Personalisierung von innenliegenden Oberflächen der Substratschichten von Sicherheits- und/oder Wertdokumenten, da sich bei der Bedruckung der Polymerschicht ein integraler Verbund ausbildet, der selbst nach einer Delamination nicht ohne weiteres manipulierbar ist.

Im Ergebnis wird durch die Verwendung der Zubereitung erreicht, dass ein Sicherheits- und/oder Wertdokument auf Basis von Polycarbonatfolien oder -substratschichten mit einer Aufhellungsschicht, d.h. einer Schicht mit Aufhellungsadditiven, versehen werden kann, wobei die Aufhellungsschicht nicht nur nicht als Trennschicht wirkt, sondern vielmehr die Bildung eines monolithischen Verbundes im Zuge des Laminierens sogar noch fördert. Der Verbund genügt in Hinblick auf Integrität und Haltbarkeit allen Anforderungen.

Eine bevorzugte Ausführungsform sieht daher vor, dass die mehreren Substratschichten alle Polycarbonatschichten sind, insbesondere aus Polycarbonaten auf Basis Bisphenol A hergestellt sind.

Das Aufbringen der nicht selbsttragenden Schicht kann mittels eines Druckverfahrens, beispielsweise eines Tintenstrahldruckverfahrens oder auch eines Siebdruckverfahrens erfolgen. Welches Druckverfahren nutzbar ist, ist im Wesentlichen von der Teilchengröße der Aufhellungsadditive abhängig.

Wenn die Zubereitung auch Farbmittel enthält, können die Aufhellungsmittel unmittelbar mit dem Farbmuster auf der mindestens einen der Substratschichten ausgebildet werden. Somit ist bei einigen Ausführungsformen vorgesehen, dass die Aufhellungsadditive als Bestandteile von einer oder mehreren Zubereitungen auf oder in die eine der mehreren Substratschichten gebracht werden, die zum Ausbilden der Musterelemente des Farbmusters verwendet werden.

Im Einzelnen kann das Polycarbonatderivat funktionelle Carbonatstruktureinheiten der Formel (I) enthalten, 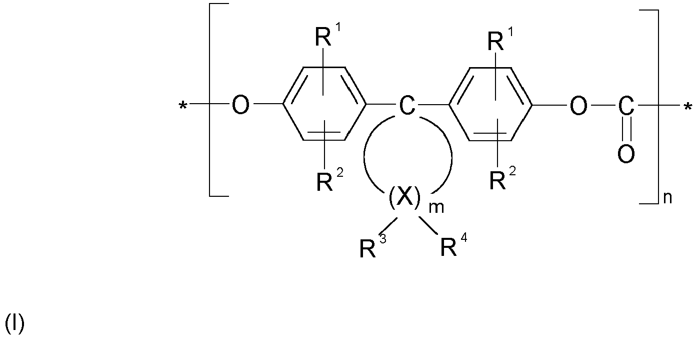
worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl;
m eine ganze Zahl von 4 bis 7, bevorzugt 4 oder 5; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Maßgabe, dass an mindestens einem Atom X, R³ und R⁴ gleichzeitig Alkyl bedeuten.

Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monomeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein.

Ein eingesetztes Polycarbonatderivat kann beispielsweise gemäß der Literaturstelle DE 38 32 396.6 aus Diphenolen der Formel (la) hergestellt werden.

Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

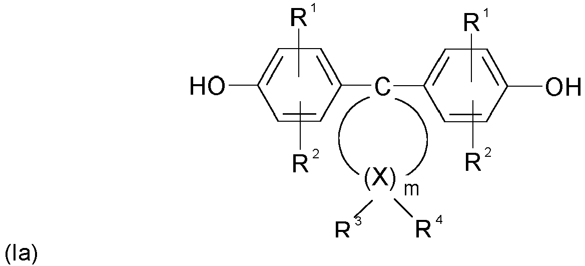

Außerdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden.

Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (la) oder Heteroatome als Brückenglieder enthalten kann.

Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha, alpha '-Bis-(hydroxyphenyl)-diisopropylbenzole sowie deren kernalkylierte und kernhalogenierte Verbindungen.

Diese und weitere geeignete Diphenole sind z.B. in den Literaturstellen US-A 3 028 365, 2 999 835, 3 148 172, 3 275 601, 2 991 273, 3 271 367, 3 062 781, 2 970 131 und 2 999 846, in den Literaturstellen DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha, alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha, alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ib), soll zwischen 100 Mol-% (Ia) zu 0 Mol-% (Ib) und 2 Mol-% (la) zu 98 Mol-% (Ib), vorzugsweise zwischen 100 Mol-% (Ia) zu 0 Mol-% (Ib) und 10 Mol-% (la) zu 90 Mol-% (Ib) und insbesondere zwischen 100 Mol-% (la) zu 0 Mol-% (Ib) und 30 Mol-% (la) zu 70 Mol-% (Ib) liegen.

Die hochmolekularen Polycarbonatderivate aus den Diphenolen der Formel (la), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die eingesetzten Polycarbonatderivate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkylsubstituierte Phenole. Zur Regelung des Molekulargewichts sind insbesondere kleine Mengen Phenole der Formel (Ic) geeignet 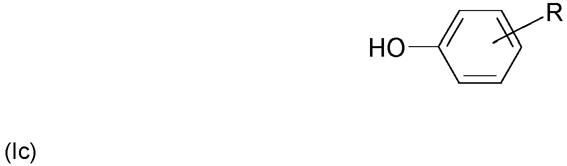 worin R einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im Allgemeinen in Mengen von 0,5 bis 10, bevorzugt 1,5 bis 8 Mol-%, bezogen auf eingesetzte Diphenole, eingesetzt.

Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wässrig alkalischer Phase gelöst. Zur Herstellung von Copolycarbonaten mit anderen Diphenolen werden Gemische von Diphenolen der Formel (la) und den anderen Diphenolen, beispielsweise denen der Formel (lb), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpoly-kondensation dient beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonatderivate können linear oder verzweigt sein, sie sind Homopolycarbonate oder Copolycarbonate auf Basis der Diphenole der Formel (la).

Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten.

Eine besonders vorteilhafte Ausführungsform der Erfindung sieht vor, dass das Polycarbonatderivat ein Copolymer enthaltend, insbesondere bestehend aus, Monomereinheiten M1 auf Basis der Formel (Ib), vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,4, beispielsweise größer als 0,5 ist. Denn bei solchen Copolymeren wurde überraschenderweise festgestellt, dass die Glastemperatur nach einem ersten Aufheizzyklus von T_{g} unter 150 °C bei einem zweiten Aufheizzyklus erhöht sein kann, was die Stabilität des erhaltenen Verbundes deutlich erhöhen kann. Bevorzugt ist es, wenn das Polycarbonatderivat ein mittleres Molekulargewicht (Gewichtsmittel) von mindestens 10.000, vorzugsweise von 20.000 bis 300.000, aufweist. Die Komponente B kann grundsätzlich im Wesentlichen organisch oder wässrig sein. Im Wesentlichen wässrig meint dabei, dass bis zu 20 Gew.-% der Komponente B) organische Lösungsmittel sein können. Im Wesentlichen organisch meint, dass bis zu 5 Gew.-% Wasser in der Komponente B) vorliegen können. Vorzugsweise enthält die Komponente B einen flüssigen aliphatischen, cycloaliphatischen und/oder aromatischen Kohlenwasserstoff, einen flüssigem organischen Ester, oder eine Mischung solcher Substanzen. Alternativ besteht die Komponente B aus genannten Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4-Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxypropionat. Ganz besonders bevorzugt sind: Mesitylen (1,3,5-Trimethylbenzol), 1,2,4-Trimethylbenzol, Cumol (2-Phenylpropan), Solvent Naptha und Ethyl-3-ethoxypropionat.

Als Lösungsmittel kommen ferner Ketone, Glykol-ether, Glykol-ester, Glykole und funktional verwandte Stoffe in Betracht.

Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt. Typischerweise weisen Substratschichten aus Polycarbonat, die zur Datenträgerherstellung eingesetzt werden, eine Glastemperatur T_{g} von mehr als 145 °C, insbesondere mehr als 147 °C, auf.

Das Polycarbonatderivat weist typischerweise ein mittleres Molekulargewicht (Gewichtsmittel) von mindestens 10.000, vorzugsweise von 20.000 bis 300.000.

Die Zubereitung kann im Detail enthalten: A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans, B) 40 bis 99,9 Gew.-%, insbesondere 45 bis 99,5 Gew.-%, eines organischen Lösungsmittels oder Lösungsmittelgemischs, C) 0 bis 6 Gew.-%, insbesondere 0,5 bis 4 Gew.-%, eines Farbmittels oder Farbmittelgemischs, D) 0,001 bis 6 Gew.-%, insbesondere 0,1 bis 4 Gew.-%, eines funktionales Materials oder einer Mischung funktionaler Materialien, die als Aufhellungsadditive im Zusammenwirken mit Laserlicht dienen, E) 0,1 bis 30 Gew.-%, insbesondere 1 bis 20 Gew.-%, Additive und/oder Hilfsstoffe, oder einer Mischung solcher Stoffe.

Als Komponente C, sofern ein Farbmittel vorgesehen sein soll, kommt grundsätzlich jedes beliebige Farbmittel oder Farbmittelgemisch in Frage. Als Farbmittel werden alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey", wie auch Pigmente (einen Überblick über organische wie anorganische Pigmente gibt Ullmann's Encyclopedia of Industrial Chemistry, Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Des Weiteren ist es vorteilhaft, wenn das Farbmittel bei Temperaturen von 160 °C und mehr für einen Zeitraum von mehr als 5 min. stabil, insbesondere farbstabil ist. Es ist auch möglich, dass das Farbmittel durch die Verarbeitungsbedingungen einer vorgegebenen und reproduzierbaren Farbveränderung unterworfen ist und entsprechend ausgewählt wird. Pigmente müssen neben der Temperaturstabilität insbesondere in feinster Partikelgrößenverteilung vorliegen. In der Praxis des Tintenstrahldrucks bedeutet dies, dass die Teilchengröße nicht über 1,0 µm hinausgehen sollte, da sonst Verstopfungen im Druckkopf die Folge sind. In der Regel haben sich nanoskalige Festkörperpigmente bewährt.

Die Farbmittel können kationisch, anionisch oder auch neutral sein. Lediglich als Beispiele für im Tintenstrahldruck verwendbare Farbmittel seinen genannt: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript^{®} Schwarz flüssig, C.I. Basic Black 11, C.I. Basic Blue 154, Cartasol^{®} Türkis K-ZL flüssig, Cartasol^{®} Türkis K-RL flüssig (C.I. Basic Blue 140), Cartasol Blau K5R flüssig. Geeignet sind des Weiteren z. B. die im Handel erhältlichen Farbstoffe Hostafine^{®} Schwarz TS flüssig (vertrieben von Clariant GmbH Deutschland), Bayscript^{®} Schwarz flüssig (C.I.-Gemisch, vertrieben von Bayer AG Deutschland), Cartasol^{®} Schwarz MG flüssig (C.I. Basic Black 11, Eingetragenes Markenzeichen der Clariant GmbH Deutschland), Flexonylschwarz^{®} PR 100 (E C.I. Nr. 30235, vertrieben von Hoechst AG), Rhodamin B, Cartasol^{®} Orange K3 GL, Cartasol^{®} Gelb K4 GL, Cartasol^{®} K GL, oder Cartasol^{®} Rot K-3B. Des Weiteren können als lösliche Farbmittel Anthrachinon-, Azo-, Chinophthalon-, Cumarin-, Methin-, Perinon-, und/oder Pyrazolfarbstoffe, z.B. unter dem Markennamen Macrolex^{®} erhältlich, Verwendung finden. Weitere geeignete Farbmittel sind in der Literaturstelle Ullmann's Encyclopedia of Industrial Chemistry, Electronic Release 2007, Wiley Verlag, Kapitel "Colorants Used in Ink Jet Inks" beschrieben. Gut lösliche Farbmittel führen zu einer optimalen Integration in die Matrix bzw. den Binder der Druckschicht. Die Farbmittel können entweder direkt als Farbstoff bzw. Pigment zugesetzt werden oder als Paste, einem Gemisch aus Farbstoff und Pigment zusammen mit einem weiteren Binder. Dieser zusätzliche Binder kann sich vom erfindungsgemäßen Binder unterscheiden (z.B. ein Polyester sein), sollte aber chemisch kompatibel mit den weiteren Komponenten der erfindungsgemäß eingesetzten Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von sogenannten Buntpigmenten in den Skalenfarben Cyan-Magenta-Yellow und auch (Ruß)-Schwarz sind Volltonfarbabbildungen möglich.

Die Komponente D umfasst Substanzen, die unter Einwirkung von Licht im Laminationskörper eine Aufhellung bewirken können, indem diese beispielsweise ein lokales Aufschäumen des Polymermaterials bewirken. Alternativ oder zusätzlich kann die Aufhellung durch eine laserinduzierte Brechungsindexänderung bewirkt werden. Auch Stoffe, die zu einer Bildung von Mikrokavitäten in einem Polymermaterial führen, können als Aufhellungsadditive verwendet werden. Exemplarisch seinen hier die von der Firma Merck KGaA, Darmstadt, Deutschland, unter den Bezeichnungen IRIOTEC^{®} 8850 und IRIOTEC^{®} 8815 vertriebenen Mikropartikel erwähnt, die aus Antimonoxid-dotiertem Glimmer bestehen. Ferner eignen sich nanoskalige Metalloxide, die beispielsweise von der Firma Evonik, Essen, Deutschland, vertrieben werden. Die Aufhellungsadditive können direkt zugegeben werden oder über eine Paste, i.e. Gemisch mit einem weiteren Binder, welcher dann Bestandteil der Komponente E bildet, oder dem erfindungsgemäß eingesetzten Binder der Komponente A.

Die Komponente E umfasst, insbesondere bei Tinten für den Tintenstrahldruck, üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme, etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel^{®}GXL und Parmetol^{®} A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw. Beispiele sind die Produktreihen Surfynol^{®} und Tergitol^{®}. Die Menge an Tensiden wird beispielsweise mit der Maßgabe gewählt, dass die Oberflächenspannung der Zubereitung im Bereich von 10 bis 60 mN/m, vorzugsweise 25 bis 45 mN/m, gemessen bei 25 °C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Zubereitung, die beispielsweise als Tinte verwendet wird, können (ggf. wasserlösliche) Polymere vorgesehen sein. Hier kommen alle für übliche Tintenformulierungen geeigneten Polymere in Frage. Beispiele sind wasserlösliche Stärke, insbesondere mit einem mittleren Molekulargewicht von 3.000 bis 7.000, Polyvinylpyrolidon, insbesondere mit einem mittleren Molekulargewicht von 25.000 bis 250.000, Polyvinylalkohol, insbesondere mit einem mittleren Molekulargewicht von 10.000 bis 20.000, Xanthan-Gummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic^{®}. Der Anteil an Biozid, bezogen auf die Gesamtmenge an Zubereitung (Tinte), kann im Bereich von 0 bis 0,5 Gew-%, vorzugsweise 0,1 bis 0,3 Gew.-%, liegen. Der Anteil an Tensid, bezogen auf die Gesamtmenge an Zubereitung (Tinte), kann im Bereich von 0 bis 0,2 Gew.-% liegen. Der Anteil an Stellmitteln kann, bezogen auf die Gesamtmenge an Zubereitung (Tinte), 0 bis 1 Gew.-%, vorzugsweise 0,1 bis 0,5 Gew.-%, betragen.

Zu den Hilfsmitteln werden auch sonstige Komponenten gezählt, wie beispielsweise Essigsäure, Ameisensäure oder n-Methyl-Pyrolidon oder sonstige Polymere aus der eingesetzten Farbstofflösung oder -Paste.

Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen. Bei einer Herstellung eines Datenträgers ist vorgesehen, dass die mehreren Substratschichten so zusammengetragen werden, dass der Laminationskörper zwischen einer Oberseite und dem im Innern ausgebildeten Farbmuster im Bereich des Farbmusters transparent ausgebildet wird, so dass das Farbmuster durch die Oberseite optisch erfassbar ist.

Die Aufhellungsadditive werden bei einer Ausführungsform in einer ohne vorherige Wechselwirkung mit Laserlicht transparenten Schicht in den Laminationskörper integriert. Auch mit den Aufhellungsadditiven ist die Schicht ohne vorherige Lasereinwirkung transparent, besonders bevorzugt klar. Es ist somit nicht unmittelbar erkennbar, dass die Schicht Aufhellungsadditive enthält. Die Aufhellungsadditive können so quasi an beliebigen Orten in dem Datenträger bzw. Laminationskörper positioniert werden.

Wird die transparente Schicht mit den Aufhellungsadditiven als nicht-selbsttragende Schicht auf einer der mehreren Substratschichten ausgebildet, so kann dieses mittels unterschiedlicher Verfahren erfolgen. Beispielsweise kann die Schicht aufgerakelt werden. Auch Druckverfahren wie Siebdruckverfahren oder Tintenstrahldruckverfahren können genutzt werden.

Bei anderen Herstellungsverfahren werden die Aufhellungsadditive mittels einer selbsttragenden der mehreren Substratschichten bereitgestellt und in den Laminationskörper integriert.

Sehr effektiv ist es, wenn die Aufhellungsadditive als Bestandteile von einer oder mehreren Zubereitungen auf oder in die eine der mehreren Substratschichten gebracht werden, die zum Ausbilden der Musterelemente des Farbmusters verwendet werden.

Bei einigen Ausführungsformen werden die Musterelemente in Mikroperforationen einer Substratschicht ausgebildet, indem die Mikroperforationen mit Zubereitungen die Farbmittel enthalten gefüllt oder teilgefüllt werden. Auch bei diesen Ausführungsformen können die Aufhellungsadditive mit den farbgebenden Zubereitungen in die Mikroperforationen integriert werden oder mittels einer getrennten Zubereitung, insbesondere in teilgefüllte Mikroperforationen eingebracht werden.

Um Datenträger individuell zu markieren, ist bei einer Ausführungsform vorgesehen, dass Codierungsdaten empfangen oder erfasst werden, die eine zu codierende bunte Information repräsentieren, ein Lasers gemäß den Codierungsdaten angesteuert wird, um lokal Laserlicht mit den Aufhellungsadditiven wechselwirken zu lassen und hierbei lokal Aufhellungen und/oder Weißfärbungen zu erzeugen, so dass im Zusammenwirken mit dem Farbmuster die bunte Information kodiert wird.

Um den Kontrast der Information zu steigern, ist vorgesehen, dass der Laser zusätzlich angesteuert wird, um im Zusammenwirken mit den Aufhellungsadditiven lokal statt der Aufhellungen oder Weißfärbungen Dunkelfärbungen oder Schwarzfärbungen zu bewirken, um den Kontrast der bunten Information zu steigern und/oder eine weitere Information zu codieren.

Bei allen Ausführungsformen ergibt es sich, dass die Aufhellungen im Innern des Laminationskörpers ausgebildet sind. Vorzugsweise sind die Aufhellungen durch ein lokales Aufschäumen des Polymermaterials im Innern des Laminationskörpers oder durch lokale Brechungsindexänderungen im Laminationskörper oder erzeugte Mikrokavitäten im Innern des Laminationskörpers verursacht.

Im Folgenden wird die Erfindung anhand von nicht limitierenden Ausführungsbeispielen näher erläutert. Es zeigen:
- Fig. 1: eine schematische Darstellung zur Erläuterung einer Herstellung einer Substratschicht mit einem Farbmuster und einer als Transferschicht ausgebildeten nicht selbsttragenden Schicht mit Aufhellungsadditiven;
- Fig. 2: eine schematische Darstellung zur Erläuterung einer Herstellung einer Substratschicht mit einem Farbmuster, in das die Aufhellungsadditive mittels der Farbzubereitungen integriert ist;
- Fig. 3: eine schematische Darstellung zur Erläuterung einer Herstellung eines Datenträgers unter Verwendung einer Substratschicht ähnlich zu der nach Fig. 1;
- Fig. 4: eine schematische Darstellung zur Erläuterung einer Herstellung eines Datenträgers unter Verwendung einer Substratschicht ähnlich zu der nach Fig. 2;
- Fig. 5: eine schematische Darstellung zur Erläuterung einer Ausbildung einer Aufhellung zur Informationskodierung eines Datenträgers ähnlich zu dem nach Fig. 3 hergestellten Datenträger;
- Fig. 6: eine schematische Darstellung zur Erläuterung einer Ausbildung einer Aufhellung zur Informationskodierung eines Datenträgers ähnlich zu dem nach Fig. 4 hergestellten Datenträger;
- Fig. 7: eine schematische Darstellung zur Erläuterung einer zusätzlichen Lasermarkierung zur Kontrastverbesserung der kodierten Information in einem Datenträger ähnlich zu dem nach Fig. 3 und 5 hergestellten Datenträger; und
- Fig. 8: eine schematische Darstellung zur Erläuterung einer zusätzlichen Lasermarkierung zur Kontrastverbesserung der kodierten Information in einem Datenträger ähnlich zu dem nach Fig. 4 und 6 hergestellten Datenträger.

### Beispiel 1.1: Herstellung eines ersten Polycarbonatderivats

205,7 g (0,90 Mol) Bisphenol A (2,2-Bis-(4-hydroxyphenyl)-propan, 30,7 g (0,10 Mol) 1,1-Bis-(4-hydroxyphenyl)-3,3,5-trimethylcyclohexan, 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung werden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit.

Das Polycarbonatderivat zeigte eine relative Lösungsviskosität von 1,255. Die Glastemperatur wurde zu 157°C bestimmt (DSC).

### Beispiel 1.2: Herstellung eines zweiten Polycarbonatderivats

Analog dem Beispiel 1 wurde eine Mischung aus 181,4 g (0,79 Mol) Bisphenol A und 63,7 g (0,21 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,263. Die Glastemperatur wurde zu 167°C bestimmt (DSC).

### Beispiel 1.3: Herstellung eines dritten Polycarbonatderivats

Analog dem Beispiel 1 wurde eine Mischung von 149,0 g (0,65 Mol) Bisphenol A (2,2-Bis-(4-hydroxyphenyl)-propan und 107,9 g (0,35 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,263. Die Glastemperatur wurde zu 183 °C bestimmt (DSC).

### Beispiel 1.4: Herstellung eines vierten Polycarbonatderivats

Analog dem Beispiel 1 wurde eine Mischung aus 91,6 g (0,40 Mol) Bisphenol A und 185,9 g (0,60 Mol) 1,1-Bis-(4-hydroxyphenyl)-3,3,5-trimethylcyclohexan zum Polycarbonatderivat umgesetzt.

Das Polycarbonatderivat zeigte eine relative Lösungsviskosität von 1,251. Die Glastemperatur wurde zu 204 °C bestimmt (DSC).

### Beispiel 1.5: Herstellung eines fünften Polycarbonatderivats

Wie in Beispiel 1 wurde eine Mischung aus 44,2 g (0,19 Mol) Bisphenol A und 250,4 g (0,81 Mol) 1,1-Bis-(4-hydroxyphenyl)-3,3,5-trimethylcyclohexan zum Polycarbonat umgesetzt.

Das Polycarbonatderivat zeigte eine relative Lösungsviskosität von 1,248. Die Glastemperatur wurde zu 216 °C bestimmt (DSC).

### Beispiel 2.1: Herstellung einer ersten für die Integration von Aufhellungsadditiven geeigneten flüssigen Zubereitung

**Tabelle I**

| | |
|---|---|
| Polycarbonatderivat (Modifiziertes Bisphenol) | 1 bis 30 % |
| Lösungsmittelgemisch | 50 bis 95 % |
| Farbmittel | 0 bis 5 % |
| Iriotecpigmente als Aufhellungsadditive | 0,1 bis 10 % |
| Additive | 0 bis 5 % |

Es wurde eine flüssige Zubereitung mit einer Zusammensetzung gemäß Tabelle I hergestellt. Als Polycarbonatderivat (modifiziertes Bisphenol) kommen unter anderem die Polycarbonatderivate der Beispiele 1.1 bis 1.5 in Betracht. Lösungsmittel können Ester, Ketone, Glykol-ether, Glykol-ester, Glykole und funktional verwandte Stoffe verwendet werden, wie oben angegeben Als Farbmittel kommen die oben aufgezählten Farbmittel in Betracht. Ist der Farbmittelanteil bei 0 %, erhält man eine farblose Zubereitung. Additive können Dispergiermittel, Entschäumer, Tenside etc. sein.

Als Aufhellungsadditive werden die lasersensitiven Additive, die unter dem Markennamen Iriotec der Firma Merck vertrieben werden, beispielsweise IRIOTEC^{®} 8850 oder IRIOTEC^{®}8815 oder eine Mischung hiervon verwendet.

Beispiel 2.3: Herstellung einer zweiten für die Integration von Aufhellungsadditiven geeigneten flüssigen Zubereitung

**Tabelle II**

| | |
|---|---|
| Polycarbonatderivat (Modifiziertes Bisphenol) | 1 bis 30 % |
| Lösungsmittelgemisch | 50 bis 95 % |
| Farbmittel | 0 bis 5 % |
| Nanometalloxid Dispersion (als Aufhellungsadditive) | 0,1 bis 10 % |
| Additive | 0 bis 5 % |

Es wurde eine flüssige Zubereitung mit einer Zusammensetzung gemäß Tabelle II hergestellt. Diese Zubereitung unterscheidet sich von der nach Beispiel 2.1 dadurch, dass andere Aufhellungsadditive verwendet werden. Geeignet sind Nanometalloxid-Pigmente. Diese werden beispielsweise von der Firma Evonik Industries vertrieben.

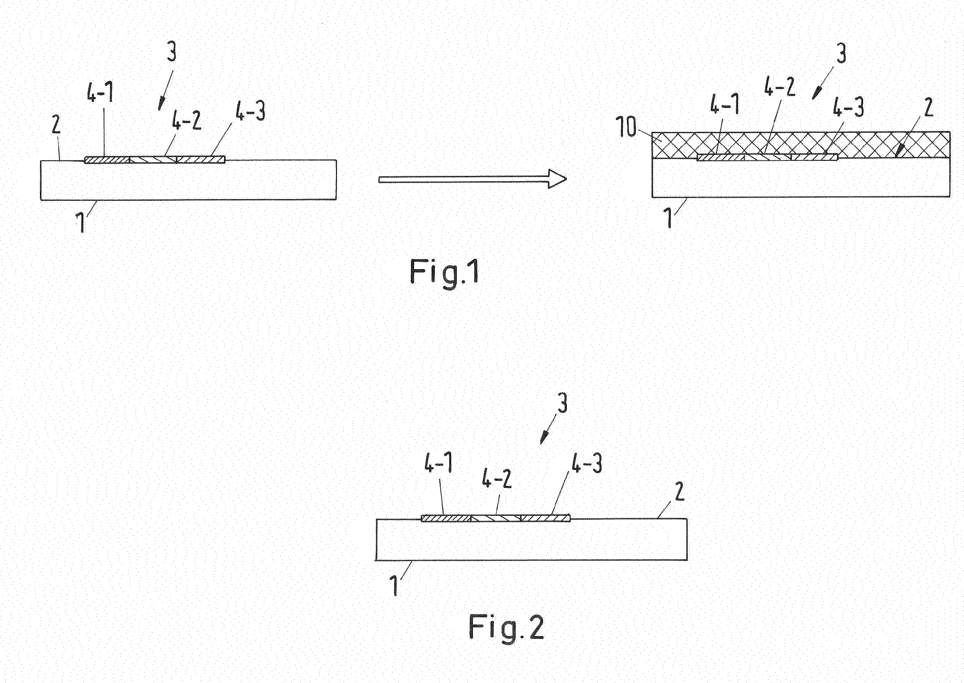

In Fig. 1 ist eine schematische Darstellung zur Erläuterung der Herstellung einer Substratschicht 1 mit einem Farbmuster 3 und einer als Transferschicht ausgebildeten, nicht selbsttragenden Schicht mit Aufhellungsadditiven gezeigt. Dargestellt ist eine Substratschicht 1. Diese ist vorzugsweise aus Polycarbonat hergestellt. Besonders bevorzugt ist diese Substratschicht transparent ausgebildet. Die Substratschicht kann jedoch auch im Volumen eingefärbt sein. An einer Oberseite 2 ist ein Farbmuster 3 ausgebildet. Dieses umfasst Musterelemente 4-1, 4-2, 4-3. Die Musterelemente 4-1, 4-2, 4-3 sind jeweils monochromatisch. Die nachgestellten Ziffern -1, -2, -3 dienen zur Unterscheidung der Musterelemente 4. In dieser Darstellung gehören die Musterelemente 4-1, 4-2, 4-3 jeweils einer anderen Klasse an. Die Musterelemente einer Klasse weisen jeweils dieselbe Farbe auf. Dies bedeutet, dass sie denselben monochromatischen Farbeindruck wie andere Musterelemente derselben Klasse aufweisen. Im dargestellten Beispiel ist das Musterelement 4-1, welches der ersten Klasse zugeordnet ist, cyanfarben ausgebildet. Das Musterelement 4-2, welches der zweiten Klasse zugeordnet ist, ist monochromatisch magentafarben ausgebildet. Das Musterelement 4-3, welches der dritten Klasse zugeordnet ist, ist gelb ausgebildet. Gemeinsam bilden die Musterelemente 4-1, 4-2, 4-3 somit ein Cyan-Magenta-Gelb-Farbmuster. Unter Verwendung der englischsprachigen Begriffe Cyan, Magenta und Yellow wird ein solches Farbmuster auch als C-M-Y-Farbmuster bezeichnet. In der grafischen Darstellung sind die unterschiedlichen Farben über unterschiedliche Schraffuren angedeutet.

Die einzelnen Musterelemente 4-1, 4-2, 4-3 sind in dem Farbmuster 3 in der Regel regelmäßig angeordnet, sodass jeweils mindestens drei der unterschiedlich farbigen Musterelemente 4-1, 4-2, 4-3 einem Bildpunkt zugeordnet werden können. Der Bildpunkt kann dann jeden Farbwert annehmen, der durch den Cyan-Magenta-Gelb-Farbraum (Gamut) aufgespannt ist. Hierfür ist es erforderlich, den Farbeindruck einzelner Musterelemente 4-1, 4-2, 4-3 zu modifizieren.

Das Farbmuster kann auf beliebige Weise auf die Substratschicht 1 aufgebracht werden. Bevorzugt wird das Farbmuster 3 jedoch mit einem Druckverfahren aufgebracht. Hierbei können beliebige Druckverfahren eingesetzt werden, beispielsweise ein Siebdruck oder auch ein Tintenstrahldruck. Besonders bevorzugt werden Drucktinten oder Zubereitungen verwendet, welche auf Basis eines Bindemittels hergestellt sind, welches ein Polycarbonatderivat umfasst. Beispielhafte Zubereitungen sind in der DE 10 2007 052 946 A1 beschrieben. Die oben angegebene Zubereitung, in der keine Aufhellungsadditive in der Komponente D enthalten sind, stellen beispielsweise geeignete Drucktinten dar, mit denen das Farbmuster aufgedruckt werden kann. Ist die Substratschicht 1 eine Polycarbonatschicht, so ergibt sich eine besonders gute und stabile Anhaftung des Farbmusters 3 an die Substratschicht 1.

Um eine Individualisierung des Farbmusters mit Aufhellungen zu ermöglichen, wird auf die Substratschicht über das Farbmuster 3 eine Aufhellungsschicht 10 mittels einer Zubereitung aufgebracht, welche Aufhellungsadditive enthält. Beispielsweise werden die Aufhellungsadditive mittels einer Zubereitung aufgebracht, die enthält:
A) 0,1 bis 30 Gew.-% eines Bindemittels mit einem Polycarbonatderivat,
B) 50 bis 95 Gew.-% eines vorzugsweise organischen Lösungsmittels oder Lösungsmittelgemischs,
C) 0 bis 5 Gew.-% eines Farbmittels oder Farbmittelgemischs (Gew.-% bezogen auf dessen Trockenmasse),
D) 0,1 bis 10 Gew.-% der Aufhellungsadditive,
E) 0 bis 5 Gew.-% Additive und/oder Hilfsstoffe, oder einer Mischung solcher Stoffe, wobei die Summe der Komponenten A) bis E) stets 100 Gew.-% ergibt.

Hierbei wird für die Komponente C ein Wert von 0 Gew.% Farbmittel oder Farbmittelgemisch gewählt, sodass man eine transparente und klare Aufhellungsschicht 10 erhält.

Für einen Siebdruck wird die Zubereitung vorzugsweise mit einer Viskosität zwischen 5 Pa s und 25 Pa s ausgebildet.

In Fig. 2 ist eine weitere schematische Darstellung zur Erläuterung der Herstellung einer Substratschicht mit einem Farbmuster sowie zur Erläuterung der Integration von Aufhellungsadditiven in einem Datenträger nach einer zweiten Variante gezeigt. Gleiche technische Merkmale sind in allen Figuren mit denselben Bezugszeichen versehen. Bei der dargestellten Ausführungsform ist auf eine Oberfläche 2 einer Substratschicht 1, welche erneut vorzugsweise aus Polycarbonat besteht, ein C-M-Y-Farbmuster 3 aufgebracht. Dieses ist vorzugsweise aufgedruckt, kann jedoch auch auf andere Weise ausgebildet werden. Bei dieser Ausführungsform sind die Musterelemente 4-1, 4-2, 4-3 des Farbmusters 3 jeweils mit einer Zubereitung aufgebracht, die zusätzlich zu Farbmitteln oder Farbmittelgemischen auch noch Aufhellungsadditive umfasst.

Vorzugsweise werden die einzelnen Musterelemente 4-1, 4-2, 4-3 jeweils mit einer die entsprechenden Farben der Musterelemente festlegenden Zubereitungen aufgebracht, die wie folgt enthalten:
A) 0,1 bis 30 Gew.-% eines Bindemittels mit einem Polycarbonatderivat,
B) 50 bis 95 Gew.-% eines vorzugsweise organischen Lösungsmittels oder Lösungsmittelgemischs,
C) 0 bis 5 Gew.-% eines Farbmittels oder Farbmittelgemischs (Gew.-% bezogen auf dessen Trockenmasse),
D) 0,1 bis 10 Gew.-% der Aufhellungsadditive oder eines Gemisches von Aufhellungsadditiven,
E) 0 bis 5 Gew.-% Additive und/oder Hilfsstoffe, oder einer Mischung solcher Stoffe, wobei die Summe der Komponenten A) bis E) stets 100 Gew.-% ergibt.

Bei den Ausführungsformen nach Fig. 1 und 2 wurde jeweils davon ausgegangen, dass das Farbmuster 3 ein C-M-Y-Farbmuster ist. Alternativ kann jedoch auch ein anderes Farbmuster, welches andere Grundfarben aufweist, verwendet werden. Insbesondere können Rot-Grün-Blau-Farbmuster verwendet werden. Diese sind insbesondere für transluzent ausgebildete Musterelemente von Interesse und für Sicherheitsdokumente, die im Bereich des Farbmusters durch den gesamten Datenträger hindurch transparent oder transluzent ausgebildet sind, sodass das Farbmuster in Durchsicht oder in Durchlicht betrachtbar ist.

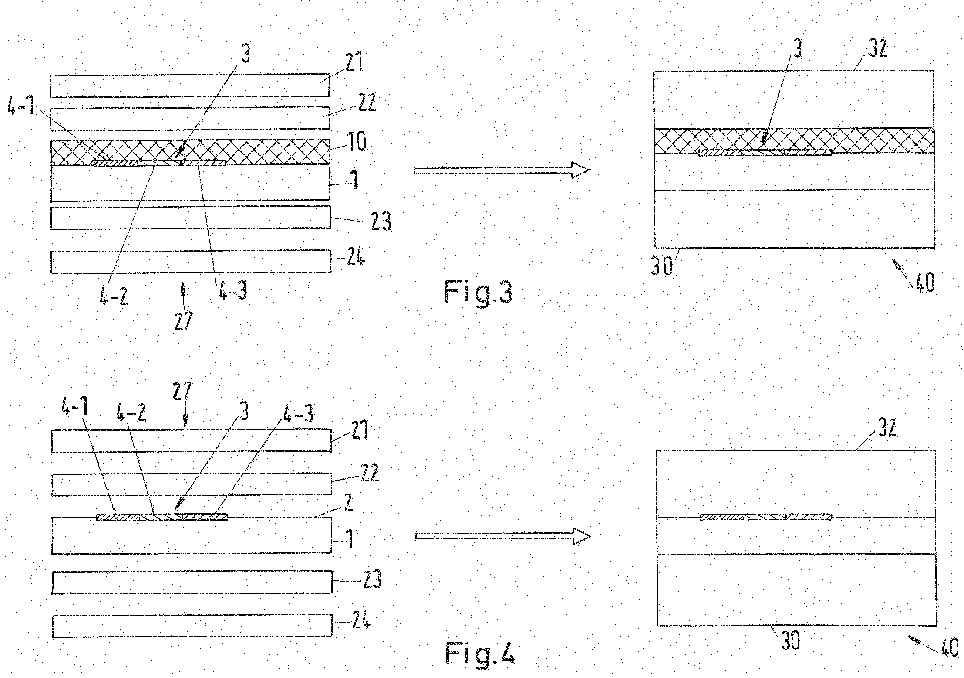

Anhand von Fig. 3 wird erläutert, wie ein Datenträger ausgehend von der in Fig. 1 dargestellten Substratschicht gebildet wird. Hierzu wird die Substratschicht 1 mit dem Farbmuster 3 und der Aufhellungsschicht 10 mit weiteren Substratschichten 21, 22, 23, 24 in einem Substratschichtenstapel 27 zusammengetragen. Die weiteren Substratschichten 21 bis 24 sind vorzugsweise ebenfalls alle aus einem Polycarbonatmaterial hergestellt. Die Substratschichten werden so übereinander geschichtet, dass sie einander flächig überdecken. Die eine Substratschicht 1 mit dem Farbmuster 3 und der Aufhellungsschicht 10 wird so angeordnet, dass die Aufhellungsschicht 10 und das Farbmuster durch eine andere der Substratschichten 21 bis 24 abgedeckt sind.

In einem Laminationsschritt werden unter Zufuhr von Energie und Anwenden eines Drucks die einzelnen Substratschichten 1 und 21 bis 24 zu einem Laminationskörper 30 zusammengefügt, der den Datenträger 40 bildet. Die einzelnen Substratschichten 1 und 21 bis 24 können eine Vielzahl von weiteren Sicherheitsmerkmalen enthalten, beispielsweise mit einem Guillochendruck, einem andersartigen Sicherheitsdruck, Prägungen, Mikroperforationen oder Ähnlichem versehen sein. Ferner können beim Zusammentragen und Laminieren weitere Sicherheitselemente wie Patches, Hologrammfäden, Hologrammfilme oder Ähnliches in den Substratschichtenstapel 27 eingefügt und so in den Laminationskörper 30 integriert werden. Alle diese zusätzlichen Sicherheitselemente, welche auch einen Mikrochip und eine Antennenstruktur umfassen können, sind hier aus Gründen der Vereinfachung nicht dargestellt.

In Fig. 4 ist das Herstellen eines Laminationskörpers analog für eine Substratschicht 1, wie sie in Fig. 2 beschrieben ist, dargestellt. In beiden Fällen ist sichergestellt, dass die mit dem Farbmuster versehene Oberseite 2 der Substratschicht 1 eine im Substratschichtenstapel 27 innenliegende Oberfläche ist. Dies bedeutet, dass die Aufhellungsschicht 10 bzw. die mit den Aufhellungsadditiven ausgebildeten Musterelemente 4-1 bis 4-3 im Innern des Laminationskörpers 30 angeordnet werden.

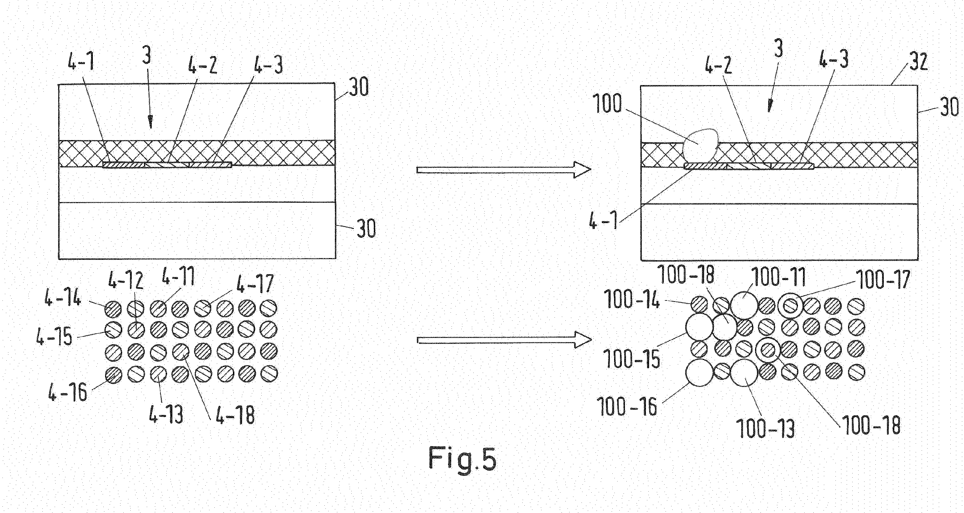

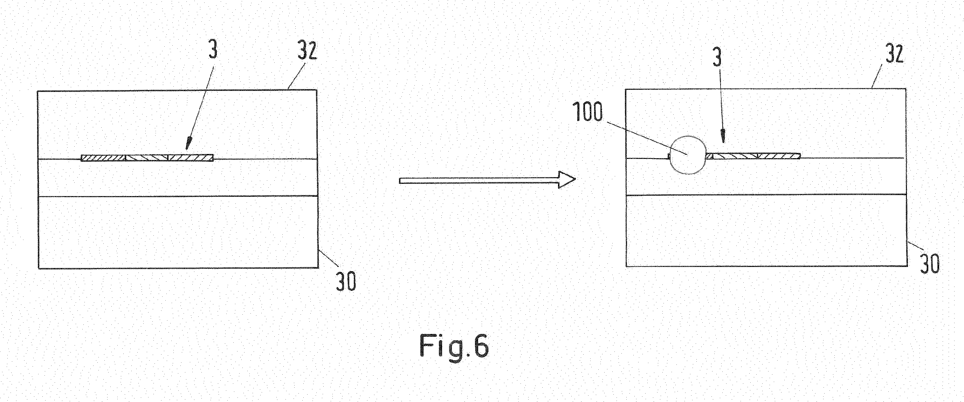

In Fig. 5 und Fig. 6 ist für den Laminationskörper 30 der Fig. 3 und Fig. 4 entsprechend dargestellt, wie eine Informationskodierung mit einer Aufhellung ausgeführt werden kann. Anhand von Kodierungsdaten werden die Gebiete in dem Laminationskörper 30 ermittelt, an denen eine Aufhellung erzeugt werden soll, um die entsprechende zu kodierende Information in den Datenträger einzubringen. Gemäß den Kodierungsdaten wird somit fokussiertes Laserlicht lokal gezielt über eine Oberseite 32 des Laminationskörpers 30 in diesen eingestrahlt. In Wechselwirkung mit den Aufhellungsadditiven in der Aufhellungsschicht 10 wird so eine Aufhellung 100 geschaffen. Beispielsweise wird das Material der Aufhellungsschicht oder angrenzender Substratschichten 22, 1 aufgeschäumt. Alternativ oder zusätzlich ist es möglich, dass Brechungsindexunterschiede bewirkt werden oder Mikrokavitäten gebildet werden. Im linken Bereich sind von oben nach unten ein Querschnitt durch den Laminationskörper 30 und eine Draufsicht auf das Farbmuster 3 im Laminationskörper schematisch dargestellt. Größen der Musterelemente 4-1 bis 4-3 sind aus Darstellungsgründen vergrößert gegenüber den Musterelementen 4 in der Draufsicht dargestellt. Diese sind im Verhältnis zu den Abmessungen des Laminationskörpers ebenfalls zu groß dargestellt.

Rechts ist das Ergebnis der Individualisierung durch Erzeugung von Aufhellung 100 dargestellt. Die Aufhellungen 100-11, 100-12, 100-13 verdecken die zugehörigen Musterelemente 4-11, 4-12, 4-13 des Farbmusters 3. Andere Aufhellungen 100-14, 100-15, 100-16, 100-17, 100-18 sind so ausgebildet, dass die Farbe der darunter befindlichen Musterelemente 4-14 bis 4-18 jeweils aufgehellt durch die darüber befindliche Aufhellung 100-14 bis 100-17 noch erkennbar sind. Hierdurch ist es möglich, gezielt durch die Aufhellungen eine bunte Information zu kodieren.

In Fig. 6 ist das analoge Beispiel für eine Ausführungsform gezeigt, bei der die Aufhellungsadditive in die Farbschicht, d.h. die Musterelemente 4-1 bis 4-3 des Farbmusters 3 integriert sind. Gut zu erkennen ist, dass die Aufhellung 100-1 im selben Volumenbereich ausgebildet ist, in dem auch das Musterelement 4-1 im Laminationskörper 30 ausgebildet ist.

In beiden Fällen wird die Aufhellung bzw. Weißfärbung lokaler Bereiche durch ein Aufschäumen, Bilden von Mikrokavitäten und/oder Erzeugen von Brechungsindexunterschieden mit Laserstrahlung herbeigeführt, beispielsweise mit frequenzverdoppeltem Licht eines Nd:YAG-Lasers, d.h. bei 532 nm.

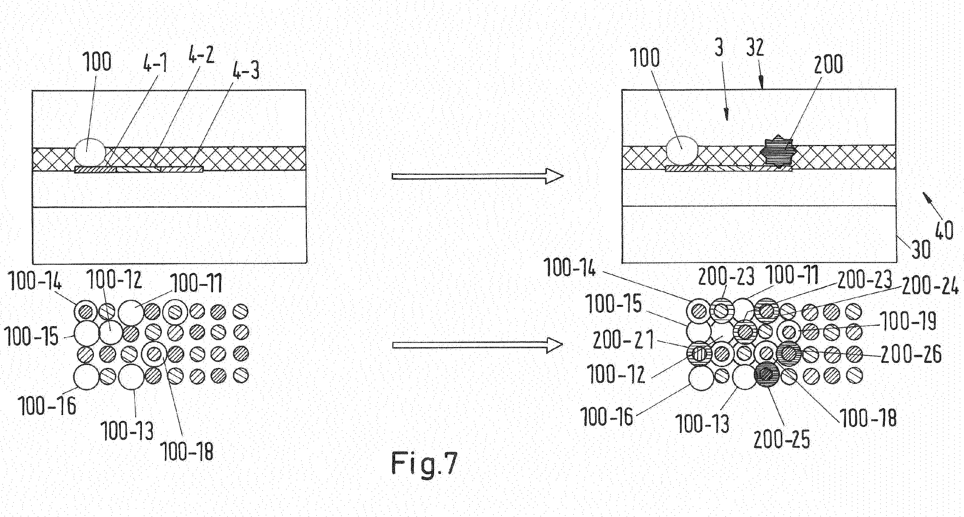

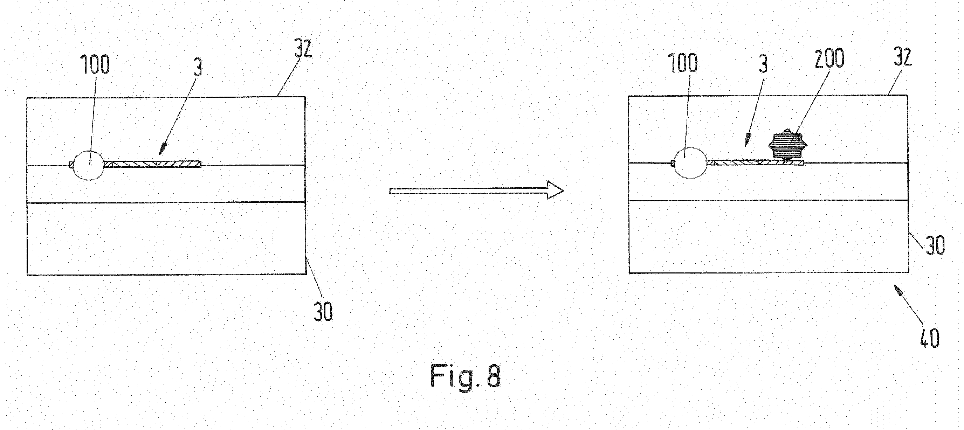

Um den Kontrast der über die Aufhellungen kodierten Information zu steigern oder auch den Farbeindruck weiter zu verändern, können zusätzlich mit einem Laser Dunkelfärbungen oder Schwärzungen ausgeführt werden. Bei geeigneter Wahl der Laserwellenlänge und Laserenergie ist es möglich, mit Hilfe der Aufhellungsadditive unmittelbar Schwärzungen 200, 200-21 bis 200-26 herbeizuführen. Dieses ist exemplarisch in Fig. 7 und Fig. 8 für die Ausführungsformen gezeigt, bei denen eine Aufhellungsschicht vorgesehen ist (Fig. 7) bzw. die Aufhellungsadditive in den Musterelementen des Farbmusters 3 integriert sind (Fig. 8). Die Dunkelfärbungen 200-x können unterschiedlich dunkel oder schwarz ausgeführt werden. Schwärzungen werden beispielsweise mit Licht der Grundwellenlänge eines Nd:YAG-Lasers erzeugt, d.h. mit 1064 nm.

Bei den Schwarz- oder Dunkelfärbungen 200-x der Fig. 7 und 8 ist eine Farbe des Musterelements oder der Musterelemente, die sich in Sichtrichtung unterhalb einer der Dunkelfärbungen 200-x befinden oder die lokal durch die Dunkelfärbungen 200-x modifiziert werden, in der Regel nicht mehr wahrnehmbar oder erfassbar. Bei schwacher oder kleinflächiger Dunkelfärbung im Verhältnis zu der Musterelementfläche, kann die Farbe des Musterelements jedoch noch erkennbar sein.

Für Aufhellungen 100-x gilt Ähnliches. Hier ist die Farbe des Musterelements jedoch häufig noch erfassbar.

Bei den dargestellten Ausführungsformen sind die Aufhellungsadditive unmittelbar benachbart oder integriert in das Farbmuster im Laminationskörper angeordnet. Andere Ausführungsformen können vorsehen, dass zwischen dem Farbmuster und einer Aufhellungsschicht ein Abstand besteht, beispielsweise eine dünne Substratschicht angeordnet ist. Bei anderen Ausführungsformen können zusätzlich oder alternativ Aufhellungsadditive über einer Substratschicht integriert werden, die im Volumen Aufhellungsadditive umfasst.

Insbesondere wenn die Musterelemente 4 des Farbmusters 3 eine transluzente Erscheinungsform aufweisen und ferner bevorzugt Farben eines RGB-Farbsystems darstellen, können die Aufhellungen auch in Sichtrichtung unter dem Farbmuster ausgebildet sein. Insbesondere im Durchlicht ist dann trotzdem ein aufgehelltes buntes Muster erkennbar.

Es ergibt sich für den Fachmann, dass hier lediglich beispielhafte Ausführungsformen beschrieben sind. Die in den unterschiedlichen Ausführungsformen beschriebenen Merkmale können zu weiteren Ausführungsformen kombiniert werden. Beispielsweise können Aufhellungsadditive sowohl in den Musterelementen bzw. den Druckzubereitungen, mit denen die Musterelemente farbig ausgebildet sind, als auch zusätzlich eine Aufhellungsschicht mit Aufhellungsadditiven vorgesehen sein.

Besonders bevorzugt sind die Laminationskörper 30 der Datenträger 40 aller Ausführungsformen aus Substratschichten hergestellt, die aus Polycarbonaten bestehen. Auch das Ausbilden des Farbmusters sowie das Einbringen der Aufhellungsadditive in den Laminationskörper erfolgt vorzugsweise mit Zubereitungen, die ein Bindemittel auf Basis eines Polycarbonatderivats umfassen. Hierdurch kann ein monolithischer Laminationskörper im Laminationsprozess geschaffen werden, der an den ursprünglichen Schichtgrenzen der aufgebrachten Zubereitungen als auch an den Schichtgrenzen zwischen aneinander angrenzenden Substratschichten keinen sichtbaren Phasenübergang zeigt. Die unterschiedlichen Schichten, aus denen der Laminationskörper hergestellt ist, können nur noch anhand von im Volumen enthaltenen Zusatzstoffen wie Farbpigmenten, den Aufhellungsadditiven oder anderen funktionalen Zusätzen unterschieden werden.

### Bezugszeichen

- 1: Substratschicht
- 2: Oberseite
- 3: Farbmuster
- 4: Musterelemente
- 4-x: Musterelement
- 10: Aufhellungsschicht
- 21-24: Substratschichten
- 27: Substratschichtenstapel
- 30: Laminationskörper
- 32: Oberseite
- 40: Datenträger
- 100: Aufhellung
- 100-x: Aufhellung
- 200: Schwarz/Grau-Färbung
- 200-x: Schwarz/Grau-Färbung

## Patentansprüche

1. Datenträger (40) für ein Sicherheitsdokument mit einem lasermarkierten oder lasermarkierbaren bunten Sicherheitsmerkmal, umfassend einen aus mehreren Substratschichten (1, 21-24), von denen eine ein aus in Basisfarben eines Farbsystems unterschiedlich eingefärbten, nebeneinander ausgebildeten Musterelementen (4-1, 4-x) aufgebautes Farbmuster (3) umfasst, gebildeten Laminationskörper (30), bei dem das Farbmuster (3) im Innern des Laminationskörpers (30) ausgebildet ist, **dadurch gekennzeichnet, dass** in dem Laminationskörper (30) zusätzlich Aufhellungsadditive integriert sind, welche bei lokaler Wechselwirkung mit Laserlicht in dem Material, in das die Aufhellungsadditive zugefügt sind, eine lokale Aufhellung (100) und/oder Weißfärbung im Innern des Laminationskörpers (30) bewirken, wobei eine Aufhellung respektive Weißfärbung im Innern eines Laminationskörpers ein Gebiet bezeichnet, das eine erhöhte Reflexion von Licht über einen breiten Wellenlängenbereich bewirkt.

2. Datenträger (40) nach Anspruch 1, wobei mittels lokal ausgebildeten Aufhellungen (100) und/oder Weißfärbungen, die über die Wechselwirkung mit Laserlicht in Bereichen mit den Aufhellungsadditiven ausgebildet sind, im Zusammenwirken mit dem Farbmuster (3) eine individuelle bunte Information kodierbar ist oder kodiert ist.

3. Datenträger (40) nach Anspruch 2, wobei die bunte Information zusätzlich zu den Aufhellungen (100) oder Weißfärbungen auch mit laserinduzierten Dunkel- oder Schwarzfärbungen (200) durch Verwendung anderer Laserparameter als zum Erzeugen der Aufhellungen oder Weißfärbungen ausgebildet ist oder ausbildbar ist.

4. Datenträger (40) nach einem der vorangehenden Ansprüche, wobei die Aufhellungsadditive drucktechnisch auf eine der Substratschichten (1), aus denen der Laminationskörper (30) gebildet ist, aufgebracht sind, wobei das Aufbringen der Aufhellungsadditive vor dem Laminieren des Laminationskörpers (30) ausgeführt wurde.

5. Datenträger (40) nach einem der vorangehenden Ansprüche, wobei die Aufhellungsadditive zumindest in einer der Farbzubereitungen enthalten sind, mit der Musterelemente (4-1, 4-x) einer Farbe ausgebildet sind, oder die Aufhellungsadditive in allen Farbzubereitungen enthalten sind, mit denen die Musterelemente (4-1, 4-x) des Farbmusters (3) ausgebildet sind.

6. Datenträger (40) nach einem der Ansprüche 4 oder 5, wobei die Aufhellungsadditive mittels einer Zubereitung in den Laminationskörper (30) integriert sind, die enthält: A) 0,1 bis 30 Gew.-% eines Bindemittels mit einem Polycarbonatderivat, auf Basis eines geminal disubstituierten Dihydroxydiphenylcycloalkans, B) 50 bis 95 Gew.-% eines organischen Lösungsmittels oder Lösungsmittelgemischs, C) 0 bis 5 Gew.-% eines Farbmittels oder Farbmittelgemischs (Gew.-% bezogen auf dessen Trockenmasse), D) 0,1 bis 10 Gew.-% der Aufhellungsadditive, E) 0 bis 5 Gew.-% Additive und/oder Hilfsstoffe, oder einer Mischung solcher Stoffe, wobei die Summe der Komponenten A) bis E) stets 100 Gew.-% ergibt.

7. Datenträger (40) nach einem der Ansprüche 1 bis 3, wobei die Aufhellungsadditive in einer als Folie ausgebildeten Substratschicht integriert sind, die zwischen der Substratschicht mit dem Farbmuster und der Oberseite des Laminationskörpers angeordnet ist und die ohne vorherige Wechselwirkung mit Laserlicht transparent ist.

8. Verfahren zum Herstellen eines Datenträgers (40) für ein Sicherheitsdokument umfassend die Schritte:
- Bereitstellen von mehreren Substratschichten (1, 21-24),
- Zusammentragen der mehreren Substratschichten (1, 21-24) zu einem Substratschichtenstapel (27), in dem die mehreren Substratschichten (1, 21-24) flächig übereinander gestapelt sind,
- Ausführen eines Laminationsschritts, indem dem Substratschichtenstapel (27) Energie zugeführt und der Substratschichtenstapel (27) gepresst wird, so dass sich die Substratschichten (1, 21-24) flächig miteinander zu einem den Datenträger (40) ausbildenden Laminationskörper (30) verbinden,
**dadurch gekennzeichnet, dass** eine der mehreren Substratschichten (1) vor dem Laminationsschritt mit einem aus in Basisfarben eines Farbsystems unterschiedlich eingefärbten, nebeneinander ausgebildeten Musterelementen (4-1, 4-x) aufgebauten Farbmuster (3) versehen ist oder wird und ins Innere des gebildeten Laminationskörpers (30) zusätzlich Aufhellungsadditive integriert werden, welche bei lokaler Wechselwirkung mit Laserlicht in dem Material, in das die Aufhellungsadditive zugefügt sind, eine lokale Aufhellung (100) und/oder Weißfärbung im Innern des Laminationskörpers (30) bewirken, wobei eine Aufhellung respektive Weißfärbung im Innern eines Laminationskörpers ein Gebiet bezeichnet, das eine erhöhte Reflexion von Licht über einen breiten Wellenlängenbereich bewirkt.

9. Verfahren nach Anspruch 8, wobei die mehreren Substratschichten (1, 21-24) so zusammengetragen werden, dass der Laminationskörper zwischen einer Oberseite (32) und dem im Innern ausgebildeten Farbmuster (3) im Bereich des Farbmusters transparent ausgebildet ist, so dass das Farbmuster (3) durch die Oberseite (32) optisch erfassbar ist.

10. Verfahren nach Anspruch 8 oder 9, wobei die Aufhellungsadditive in einer nichtselbsttragenden Schicht in den Laminationskörper (30) integriert werden.

11. Verfahren nach Anspruch 10, wobei die Aufhellungsadditive mittels einer Zubereitung integriert werden, die enthält: A) 0,1 bis 30 Gew.-% eines Bindemittels mit einem Polycarbonatderivat, auf Basis eines geminal disubstituierten Dihydroxydiphenylcycloalkans, B) 50 bis 95 Gew.-% eines organischen Lösungsmittels oder Lösungsmittelgemischs, C) 0 bis 5 Gew.-% eines Farbmittels oder Farbmittelgemischs (Gew.-% bezogen auf dessen Trockenmasse), D) 0,1 bis 10 Gew.-% der Aufhellungsadditive, E) 0 bis 5 Gew.-% Additive und/oder Hilfsstoffe, oder einer Mischung solcher Stoffe, wobei die Summe der Komponenten A) bis E) stets 100 Gew.-% ergibt.

12. Verfahren nach einem der Ansprüche 8 bis 11, wobei die Aufhellungsadditive in einer ohne vorherige Wechselwirkung mit Laserlicht transparenten Schicht in den Laminationskörper (30) integriert werden.

13. Verfahren nach einem der Ansprüche 8 bis 12, wobei, um den Datenträger individuell zu markieren, vorgesehen ist, dass Codierungsdaten empfangen oder erfasst werden, die eine zu codierende bunte Information repräsentieren, und ein Laser gemäß den Codierungsdaten angesteuert wird, um lokal Laserlicht mit den Aufhellungsadditiven wechselwirken zu lassen und hierbei lokal Aufhellungen (100, 100-x) und/oder Weißfärbungen zu erzeugen, so dass im Zusammenwirken mit dem Farbmuster (3) die bunte Information kodiert wird.

14. Verfahren nach Anspruch 13, wobei der Laser zusätzlich angesteuert wird, um im Zusammenwirken mit den Aufhellungsadditiven lokal statt der Aufhellungen (100) oder Weißfärbungen zusätzlich durch Verwendung einer höheren Laserintensität Dunkelfärbungen (200) zu bewirken, um einen Kontrast der bunten Information zu steigern und/oder eine weitere Information zu codieren.

15. Verfahren nach Anspruch 13 oder 14, wobei die Aufhellungen durch ein lokales Aufschäumen des Polymermaterials im Innern des Laminationskörpers (30) und/ oder durch ein Erzeugen von lokalen Brechungsindexänderungen im Laminationskörper (30) und/oder das Ausbilden von Mikrokavitäten verursacht werden.

## Claims

1. A data storage medium (40) for a security document with a laser-marked or laser-markable colored security feature, comprising a lamination body (30) formed by a plurality of substrate layers (1, 21 -24), one of which comprises a color pattern (3) composed of differently colored pattern elements (4-1, 4-x) formed next to one another, in the basic colors of a color system, in which the color pattern (3) is formed inside the lamination body (30), **characterized in that** brightening additives are additionally incorporated into the lamination body (30) which can cause a local brightening (100) and/or whitening inside the lamination body (30) on local interaction with laser light in the material to which the brightening additives are added, wherein a brightening or whitening inside a lamination body denotes an area which causes an increased reflection of light over a broad wavelength range.

2. The data storage medium (40) according to claim 1, wherein individual color information can be encoded or is encoded in collaboration with the color pattern (3) by means of locally formed brightening (100) and/or whitening formed by the interaction with laser light in areas with the brightening additives.

3. The data storage medium (40) according to claim 2, wherein the color information in addition to the brightening (100) or whitening is also formed or can be formed by laser-induced dark or black colours (200) by using different laser parameters than for producing the brightening or whitening.

4. The data storage medium (40) according to any one of the preceding claims, wherein the brightening additives are applied by printing onto one of the substrate layers (1) from which the lamination body (30) is formed, wherein the application of the brightening additives is carried out prior to the lamination of the lamination body (30).

5. The data storage medium (40) according to any one of the preceding claims, wherein the brightening additives are contained in at least one of the color preparations, with which pattern elements (4-1, 4-x) of one color are formed, or the brightening additives are contained in all color preparations with which the pattern elements (4-1, 4-x) of the color pattern (3) are formed.

6. The data storage medium (40) according to any one of claims 4 or 5, wherein the brightening additives are incorporated into the lamination body (30) by means of a preparation, which contains: A) 0.1 to 30 wt.-% binder with a polycarbonate derivate, based on a geminally disubstituted dihydroxydiphenyl cycloalkane, B) 50 to 95 wt.-% organic solvent or solvent mixture, C) 0 to 5 wt.-% colorant or colorant mixture (wt.-% based on its dry mass), D) 0.1 to 10 wt.-% brightening additives, E) 0 to 5 wt.-% additives and/or auxiliary materials, or a mixture of such substances, wherein the sum of components A) to E) is always 100 wt.-%.

7. The data storage medium (40) according to any one of claims 1 to 3, wherein the brightening additives are incorporated into a substrate layer formed as a film which is arranged between the substrate layer with the color pattern and the upper side of the lamination body and is transparent without prior interaction with laser light.

8. A method for producing a data storage medium (40) for a security document, comprising the steps:
- providing a plurality of substrate layers (1, 21 -24),
- bringing together the plurality of substrate layers (1, 21 -24) to form a stack of substrate layers (27) in which the plurality of substrate layers (1, 21 -24) are stacked flat on top of one another,
- performing a lamination step by supplying energy to the substrate layer stack (27) and pressing the substrate layer stack (27), so that the substrate layers (1, 21 -24) bond flat with one another to form a lamination body (30) forming the data storage medium (40),
**characterized in that** prior to the lamination step, one of the plurality of substrate layers (1) is already provided with or is provided with a color pattern (3) composed of differently colored pattern elements (4-1, 4-x) formed next to one another, in the basic colors of a color system, and brightening additives are additionally incorporated into the formed lamination body (30) which cause a local brightening (100) and/or whitening inside the lamination body (30) on local interaction with laser light in the material to which the brightening additives are added, wherein a brightening or whitening inside a lamination body denotes an area which causes an increased reflection of light over a broad wavelength range.

9. The method according to claim 8, wherein the plurality of substrate layers (1, 21 - 24) are brought together such that the lamination body between a top side (32) and the color pattern (3) formed on the inside is transparent in the area of the color pattern, so that the color pattern (3) can be detected optically through the top side (32).

10. The method according to claim 8 or 9, wherein the brightening additives are incorporated into the lamination body (30) in a non-self-supporting layer.

11. The method according to claim 10, wherein the brightening additives are incorporated by means of a preparation containing: A) 0.1 to 30 wt.-% binder with a polycarbonate derivate, based on a geminally disubstituted dihydroxydiphenyl cycloalkane, B) 50 to 95 wt.-% organic solvent or solvent mixture, C) 0 to 5 wt.-% colorant or colorant mixture (wt.-% based on its dry mass), D) 0.1 to 10 wt.-% brightening additives, E) 0 to 5 wt.-% additives and/or auxiliary materials, or a mixture of such substances, wherein the sum of components A) to E) is always 100 wt.-%.

12. The method according to any one of claims 8 to 11, wherein the brightening additives are incorporated into the lamination body (30) in a layer which is transparent without prior interaction with laser light.

13. The method according to any one of claims 8 to 12, wherein, in order to mark the data storage medium individually, it is provided that coding data is received or detected which represents color information to be encoded, and a laser is controlled in accordance with the coding data in order to allow laser light to interact locally with the brightening additives and to generate herby brightening (100, 100-x) and/or whitening locally, so that the color information is encoded in cooperation with the color pattern (3).

14. The method according to claim 13, wherein the laser is additionally controlled in cooperation with the brightening additives to bring about additional dark coloring (200) instead of the brightening (100) or whitening (200) by using a higher laser intensity in order to increase a contrast of the color information and/or to encode further information.

15. The method according to claim 13 or 14, wherein the brightening is caused by local foaming of the polymer material inside the lamination body (30) and/or by generating local changes in the refractive index in the lamination body (30) and/or forming microactivities.

## Revendications

1. Support de données (40) pour un document sécurisé avec une caractéristique de sécurité multicolore marquée par laser ou marquable par laser, comprenant une parmi plusieurs couches de substrat (1, 21-24), dont l'une comprend un motif de couleur (3) constitué d'éléments (4-1, 4-x) disposés les uns à côté des autres, colorés de différentes façon dans les couleurs de base d'un système de couleurs, un élément laminé (30) pour lequel le motif de couleur (3) est constitué à l'intérieur de l'élément laminé (30), **caractérisé en ce qu'**en plus, des additifs d'éclaircissement sont intégrés dans l'élément laminé (30), qui génèrent un éclaircissement local (100) et/ou un blanchiment à l'intérieur de l'élément laminé (30) par interaction avec la lumière laser dans le matériau dans lequel les additifs d'éclaircissement sont ajoutés, où un éclaircissement ou respectivement un blanchiment à l'intérieur de l'élément laminé représente une zone qui exerce une réflexion accrue de la lumière dans une large gamme de longueurs d'onde.

2. Support de données (40) selon la revendication 1, dans lequel une information individuelle multicolore est codée ou codable au moyen d'éclaircissements (100) et/ou blanchiments constitués localement qui sont constitués par l'interaction avec la lumière laser dans des zones avec les additifs d'éclaircissement, en coopération avec le motif de couleur (3).

3. Support de données (40) selon la revendication 2, dans lequel l'information multicolore est constituée ou constituable, en plus des éclaircissements (100) ou blanchiments, aussi avec des obscurcissements ou noircissements (200) par utilisation d'autres paramètres du laser que ceux destinés à la création des éclaircissements ou blanchiments.

4. Support de données (40) selon l'une des revendications précédentes, dans lequel les additifs d'éclaircissement sont appliqués par des techniques d'impression sur l'une des couches de substrat (1) dont est constitué l'élément laminé (30), où l'application des additifs d'éclaircissement est effectuée avant le laminage de l'élément laminé (30).

5. Support de données (40) selon l'une des revendications précédentes, dans lequel les additifs d'éclaircissement sont contenus au moins dans une des préparations colorées, sont constitués avec l'élément (4-1, 4-x) d'une couleur, ou les additifs d'éclaircissement sont contenus dans toutes les préparations colorées avec lesquelles les éléments (4-1, 4-x) du motif de couleur (3) sont constitués.

6. Support de données (40) selon l'une des revendications 4 ou 5, dans lequel les additifs d'éclaircissement sont intégrés au moyen d'une préparation dans l'élément laminé (30), et contiennent :
A) 0,1 à 30 % en poids d'un liant avec un dérivé polycarbonate, à base d'un dihydroxydiphénylcycloalcane géminé disubstitué,
B) 50 à 95 % en poids d'un solvant ou mélange de solvants organique,
C) 0 à 5 % en poids d'un colorant ou mélange de colorants (% en poids rapporté à leur poids sec),
D) 0,1 à 10 % en poids des additifs d'éclaircissement,
E) 0 à 5 % en poids d'additifs et/ou adjuvants, ou d'un mélange de telles substances, la somme des composants A) à E) donnant toujours 100 % en poids.

7. Support de données (40) selon l'une des revendications 1 à 3, dans lequel les additifs d'éclaircissement sont intégrés dans une couche de substrat constituée comme une feuille disposée entre la couche de substrat avec le motif de couleur et la face supérieure de l'élément laminé et qui est transparente sans interaction préalable avec la lumière laser.

8. Procédé de fabrication du support de données (40) pour un document sécurisé comprenant les étapes constituées de :
- Préparation de plusieurs couches de substrat (1, 21-24),
- Application conjointe des plusieurs couches de substrat (1, 21-24) en un empilement de couches de substrat (27), dans lequel les plusieurs couches de substrat (1, 21-24) sont empilées les unes sur les autres sur toute la surface,
- Réalisation d'une étape de laminage, dans laquelle de l'énergie est ajoutée à l'empilement de couches de substrat (27) et l'empilement de couches de substrat (27) est comprimé de sorte que les couches de substrat (1, 21-24) se lient entre elles sur toute la surface en un élément de laminage (30) constituant le support de données (40),
**caractérisé en ce qu'**avant l'étape de laminage, l'une des plusieurs couches de substrat (1) est ou devient munie d'un motif de couleur (3) constitué d'éléments (4-1, 4-x) disposés les uns à côté des autres, colorés de différentes façon dans les couleurs de base d'un système de couleurs, et en plus des additifs d'éclaircissement sont intégrés à l'intérieur de l'élément laminé (30) qui génèrent un éclaircissement local (100) et/ou un blanchiment à l'intérieur de l'élément laminé (30) par interaction locale avec la lumière laser dans le matériau dans lequel les additifs d'éclaircissement sont ajoutés, où un éclaircissement ou respectivement un blanchiment à l'intérieur de l'élément de laminage représente une zone qui exerce une réflexion accrue de la lumière dans une large gamme de longueurs d'onde.

9. Procédé selon la revendication 8, dans lequel les plusieurs couches de substrat (1, 21-24) sont appliquées ensemble de sorte que l'élément laminé soit transparent entre une face supérieure (32) et le motif de couleur (3) constitué à l'intérieur dans la zone du motif de couleur, pour que l'on puisse capter optiquement le motif de couleur (3) à travers la face supérieure (32).

10. Procédé selon la revendication 8 ou 9, dans lequel les additifs d'éclaircissement sont intégrés dans une couche non autoporteuse dans l'élément laminé (30).

11. Procédé selon la revendication 10, dans lequel les additifs d'éclaircissement sont intégrés au moyen d'une préparation qui contient :
A) 0,1 à 30 % en poids d'un liant avec un dérivé polycarbonate, à base d'un dihydroxydiphénylcycloalcane géminé disubstitué,
B) 50 à 95 % en poids d'un solvant ou mélange de solvants organique,
C) 0 à 5 % en poids d'un colorant ou mélange de colorants (% en poids rapporté à leur poids sec),
D) 0,1 à 10 % en poids des additifs d'éclaircissement,
E) 0 à 5 % en poids d'additifs et/ou adjuvants, ou d'un mélange de telles substances, la somme des composants A) à E) donnant toujours 100 % en poids.

12. Procédé selon l'une des revendications 8 à 11, dans lequel les additifs d'éclaircissement sont intégrés dans l'élément laminé (30) sans interaction préalable avec la couche transparente à la lumière laser.

13. Procédé selon l'une des revendications 8 à 12, dans lequel il est prévu, pour marquer individuellement le support de données, que des données de codage soient reçues ou captées qui représentent une information multicolore à coder, et qu'un laser soit contrôlé en fonction des données de codage pour faire interagir localement la lumière laser avec les additifs d'éclaircissement et y générer localement des éclaircissements (100, 100-x) et/ou blanchiments de façon à coder les informations multicolores en coopération avec le motif de couleur (3).

14. Procédé selon la revendication 13, dans lequel le laser est commandé pour générer en plus des assombrissements (200) localement au lieu des éclaircissements (100) ou des blanchiments en coopération avec les additifs d'éclaircissement en utilisant une intensité accrue du laser, afin d'augmenter un contraste des informations multicolores et/ou de coder d'autres informations.

15. Procédé selon la revendication 13 ou 14, dans lequel les éclaircissements sont provoqués par une ébullition locale du matériau polymère à l'intérieur de l'élément laminé (30) et/ou par la création de modifications locales de l'indice de réfraction à l'intérieur de l'élément laminé (30) et/ou par la formation de microcavités.
